# EUROPEAN PATENT APPLICATION

(11) **EP 4 807 803 A1**
(43) Date of publication of application: **16.09.2026**
(21) Application number: 24926564.6
(22) Date of filing: 24.05.2024
(51) Int. Cl.: H01M 4/139, G06Q 30/018, H01M 4/04

(54) **ELECTRODE SHEET PRODUCTION SYSTEM AND CONTROL METHOD THEREFOR**

(30) Priority: 01.03.2024 CN 202410232302
(71) Applicant: Jiangsu Contemporary Amperex Technology Limited, Changzhou, Jiangsu 213300 (CN)
(72) Inventor: ZHANG, Bingbing, Changzhou, Jiangsu 213300 (CN); BI, Huailei, Changzhou, Jiangsu 213300 (CN); ZHANG, Wenkai, Changzhou, Jiangsu 213300 (CN); YUE, Yumei, Changzhou, Jiangsu 213300 (CN)
(74) Representative: Lorenz Seidler Gossel Part. mbB
(86) International application number: PCT/CN2024/095115
(87) International publication number: WO 2025/179693

(57) **Abstract**

An electrode sheet production system and a control method therefor. The electrode sheet production system comprises: a manufacturing execution system, a coating superordinate computer, a coating device, a cold pressing superordinate computer, a cold pressing device, a die cutting superordinate computer, and a die cutting device; the coating device, the cold pressing device, and the die cutting device are each provided with a radio frequency identification system, and the radio frequency identification system comprises a radio frequency reader-writer and an electronic tag; the manufacturing execution system is separately connected to the coating superordinate computer, the cold pressing superordinate computer, and the die cutting superordinate computer; the coating superordinate computer is connected to the coating device, the cold pressing superordinate computer is connected to the cold pressing device, and the die cutting superordinate computer is connected to the die cutting device; in each of the coating device, the cold pressing device, and the die cutting device, the radio frequency reader-writer is mounted on at least one side of a spindle, and the electronic tag is mounted on a drum of a material roll; the radio frequency reader-writer is used for reading a radio frequency code of the material roll from the electronic tag on the material roll on the spindle and transmitting the radio frequency code to the manufacturing execution system. According to the electrode sheet production system, the radio frequency code of the material roll can be automatically uploaded to the manufacturing execution system.

## Description

### CROSS-REFERENCE TO RELATED APPLICATIONS

The present application claims priority to the Chinese patent application 2024102323025 filed on March 1, 2024 and entitled "ELECTRODE SHEET PRODUCTION SYSTEM AND CONTROL METHOD THEREFOR", which is incorporated herein by reference in its entirety.

### TECHNICAL FIELD

The present application relates to the field of battery technologies, and in particular to an electrode sheet production system and a control method therefor.

### BACKGROUND

The electrode sheet is a core component of a battery and has a significant impact on the energy density, performance, and cost of the battery. Under the condition that quality issues arise with the battery, it is often necessary to trace back which coated material roll the electrode sheet of the battery was produced from, and which batteries the coated material roll was used to produce. Therefore, during the electrode sheet production process, it is necessary to record the flow of materials to facilitate subsequent tracing.

In the related art, for material rolls produced by coating, a manufacturing execution system generates a roll number for the material roll, and operators manually affix a barcode containing the roll number to the material roll, so that the physical material roll corresponds to the material roll recorded in the manufacturing execution system via the barcode. In subsequent processes, the material roll is identified and information about the material rolls produced in the subsequent processes is recorded based on the barcode affixed to the material roll.

In the above related art, data recording and management in each process of electrode sheet production are performed based on barcodes manually affixed to the material rolls. Manual affixing is prone to errors, leading to inconsistencies between the roll number recorded in the manufacturing execution system and the roll number contained in the barcode on the actual material roll, which in turn causes confusion during subsequent data tracing and makes it impossible to trace accurate electrode sheet production data.

The above statements are provided merely to present background technical information related to the present application and do not necessarily constitute prior art.

### SUMMARY

In view of the technical problem in the related art described above, namely that manual data entry is prone to errors, leading to inability to perform accurate data tracing, the present application provides an electrode sheet production system and a control method therefor.

According to a first aspect of embodiments of the present application, an electrode sheet production system is provided, including: a manufacturing execution system, a coating superordinate computer, a coating device, a cold pressing superordinate computer, a cold pressing device, a die cutting superordinate computer, and a die cutting device, where the coating device, the cold pressing device, and the die cutting device are each provided with a radio frequency identification system; and the radio frequency identification system includes a radio frequency reader-writer and an electronic tag;
the manufacturing execution system is connected to the coating superordinate computer, the cold pressing superordinate computer, and the die cutting superordinate computer; the coating superordinate computer is connected to the coating device, the cold pressing superordinate computer is connected to the cold pressing device, and the die cutting superordinate computer is connected to the die cutting device;
in the coating device, the cold pressing device, and the die cutting device, the radio frequency reader-writer is mounted on at least one side of a spindle for placing a material roll, and the electronic tag is mounted on a drum of the material roll; and
the radio frequency reader-writer is configured to read a radio frequency code of the material roll from the electronic tag of the material roll on the spindle, and transmit the radio frequency code to the manufacturing execution system.

In this embodiment, the radio frequency reader-writers are disposed at the spindles in the coating device, the cold pressing device, and the die cutting device, and the electronic tags are mounted on the drums of the material rolls. The radio frequency code of the material roll can be automatically uploaded to the manufacturing execution system through the radio frequency reader-writer, so that the manufacturing execution system can perform recording of the material roll based on the radio frequency code on the physical material roll, which effectively improves the consistency between the physical object and the system record, and helps improve the accuracy of subsequent data tracing. Moreover, manual intervention in the electrode sheet production process is reduced, making the degree of automation in electrode sheet production higher. Furthermore, in this electrode sheet production system, the coating device, the cold pressing device, and the die cutting device each have a respective corresponding superordinate computer. Such a distributed deployment manner decouples the data communication and processing among the various processes of the electrode sheet production system, so that even if an abnormality occurs in one process, the normal operation of other processes will not be affected.

In some embodiments of the present application, the coating device includes a first rewinding spindle for installing a coated material roll and a first bracket provided on at least one side of the first rewinding spindle; and
the radio frequency reader-writer is mounted on at least one of the first brackets, and a radio frequency range of the radio frequency reader-writer covers one first rewinding spindle.

The radio frequency reader-writer is disposed at the first rewinding spindle of the coating device, thereby implementing automatic identification of the radio frequency code of the coated material roll, which helps make the physical coated material roll actually produced correspond one-to-one with the roll number of the coated material roll recorded in the manufacturing execution system, reducing the inconsistency between the physical coated material roll and the roll number recorded in the manufacturing execution system. The radio frequency range of the radio frequency reader-writer covers one first rewinding spindle, thereby reading only the electronic tag of the material roll on the said first rewinding spindle and reducing interference from material rolls on other first rewinding spindles.

In some embodiments of the present application, the radio frequency reader-writer mounted on the first bracket is configured to read the electronic tag in the coated material roll on the first rewinding spindle, and transmit the read coated radio frequency data to a programmable controller included in the coating device;
the programmable controller of the coating device is configured to transmit the coated radio frequency data to the coating superordinate computer; and
the coating superordinate computer is configured to determine a radio frequency code of the coated material roll based on the coated radio frequency data, and transmit the radio frequency code of the coated material roll to the manufacturing execution system.

The entire process described above requires no manual intervention, implementing automatic identification and uploading of the radio frequency code of the coated material roll, thereby helping the manufacturing execution system perform recording of the coated material roll based on the radio frequency code of the coated material roll, and ensuring the consistency between the physical coated material roll in the coating process and the record in the manufacturing execution system.

In some embodiments of the present application, the coating superordinate computer is configured to extract a plurality of radio frequency codes from the coated radio frequency data; count the number of radio frequency codes with the same first preset number of digits based on the plurality of radio frequency codes; and determine the radio frequency code with the largest counted number as the radio frequency code of the coated material roll.

The coating superordinate computer determines the number of radio frequency codes with the same first preset number of digits from the coated radio frequency data read by the radio frequency reader-writer, and determines the radio frequency code with the largest number as the radio frequency code of the coated material roll. That is, the radio frequency code that is read the largest number of times is adopted as the radio frequency code of the coated material roll, which improves the accuracy of radio frequency code reading.

In some embodiments of the present application, the cold pressing device includes a first unwinding spindle for installing a coated material roll and a second rewinding spindle for installing a cold pressed material roll; where
at least one side of the first unwinding spindle is provided with a second bracket, and the radio frequency reader-writer is mounted on at least one of the second brackets;
one end of the second rewinding spindle is mounted on a first side surface of a first support plate, and a third bracket and a fourth bracket are also mounted on the first side surface; one end of the third bracket is mounted on the first side surface, and an end of the third bracket away from the first side surface is provided with a radio frequency reader-writer; and
one end of the fourth bracket is connected to an end of the third bracket close to the first side surface, one side surface of the fourth bracket is connected to the first support plate, an end portion of the other end of the fourth bracket is close to a position at which the second rewinding spindle is connected to the first support plate, and the other end of the fourth bracket is provided with a radio frequency reader-writer; and a power of the radio frequency reader-writer on the third bracket is greater than a power of the radio frequency reader-writer on the fourth bracket.

The radio frequency reader-writer is disposed at the unwinding position of the cold pressing device to automatically read the radio frequency code of the unwound coated material roll, and then the roll number of the unwound coated material roll can be automatically and accurately obtained based on the radio frequency code. Radio frequency reader-writers are respectively provided on two sides of the second rewinding spindle of the cold pressing device, and the power on one side is greater than the power on the other side, which can improve the accuracy of reading the radio frequency code of the cold pressed material roll.

In some embodiments of the present application, the radio frequency reader-writer mounted on the second bracket is configured to read the electronic tag in the coated material roll on the first unwinding spindle, and transmit the read coated radio frequency data to a programmable controller included in the cold pressing device;
the radio frequency reader-writers mounted on the third bracket and the fourth bracket are configured to read the electronic tag in the cold pressed material roll on the second rewinding spindle, and transmit the read cold pressed radio frequency data to the programmable controller included in the cold pressing device;
the programmable controller of the cold pressing device is configured to transmit the coated radio frequency data and the cold pressed radio frequency data to the cold pressing superordinate computer; and
the cold pressing superordinate computer is configured to: determine a radio frequency code of the coated material roll on the first unwinding spindle based on the coated radio frequency data; determine the radio frequency code of the cold pressed material roll based on the cold pressed radio frequency data; and transmit the radio frequency code of the coated material roll and the radio frequency code of the cold pressed material roll to the manufacturing execution system.

In the cold pressing process, the electronic tag on the unwound coated material roll can be automatically read by the radio frequency reader-writer at the cold pressing unwinding position, and the electronic tag on the cold pressed material roll obtained by rewinding can be automatically read by the radio frequency reader-writer at the cold pressing rewinding position. The read data is automatically uploaded to the cold pressing superordinate computer by the programmable controller in the cold pressing device. The cold pressing superordinate computer extracts the radio frequency code of the unwound coated material roll from the read coated radio frequency data, extracts the radio frequency code of each cold pressed material roll obtained by rewinding from the cold pressed radio frequency data, and uploads the radio frequency codes to the manufacturing execution system. The entire process requires no manual intervention, implementing automatic identification and uploading of the radio frequency codes of a plurality of material rolls in unwinding and rewinding in the cold pressing process, which helps the manufacturing execution system record the material rolls based on the radio frequency codes of the material rolls, and ensures the consistency between the physical material rolls in the cold pressing process and the record in the manufacturing execution system.

In some embodiments of the present application, the cold pressing superordinate computer is configured to obtain the radio frequency code with the strongest signal strength from the cold pressed radio frequency data transmitted by the radio frequency reader-writer on the fourth bracket, as the radio frequency code of a first cold pressed material roll on the second rewinding spindle close to the fourth bracket; and exclude the radio frequency code of the first cold pressed material roll from the cold pressed radio frequency data transmitted by the radio frequency reader-writer on the third bracket, and obtain the radio frequency code with the strongest signal strength from the remaining cold pressed radio frequency data, as the radio frequency code of a second cold pressed material roll on the second rewinding spindle close to the third bracket.

One radio frequency reader-writer is provided on each of two sides of the second rewinding spindle, where the radio frequency reader-writer on the fourth bracket is closer to the cold pressed material roll, and has a relatively small power, so such radio frequency reader-writer also has a smaller radio frequency range, which helps read the electronic tag of the cold pressed material roll closer to the fourth bracket and reduces interference from the electronic tag of the cold pressed material roll farther away. The radio frequency reader-writer on the third bracket has a larger radio frequency range, so such radio frequency reader-writer may read the electronic tags of all cold pressed material rolls on the second rewinding spindle. First, the radio frequency code of the first cold pressed material roll identified by the radio frequency reader-writer on the fourth bracket is excluded from the radio frequency codes read by the radio frequency reader-writer on the third bracket, and then the radio frequency code with the strongest radio frequency signal is selected from the remaining radio frequency codes. In this way, the radio frequency code of each cold pressed material roll on the second rewinding spindle can be accurately read.

In some embodiments of the present application, the die cutting device includes a second support plate, a first fixing rod, a second fixing rod, a fifth bracket, a sixth bracket, a second unwinding spindle for installing a cold pressed material roll, and a third rewinding spindle for installing a die cut material roll;
one end of the second unwinding spindle, one end of the third rewinding spindle, one end of the first fixing rod, and one end of the second fixing rod are all mounted on a first side surface of the second support plate;
one end of the fifth bracket is mounted on the first fixing rod, the other end of the fifth bracket is provided with a radio frequency reader-writer, and a radio frequency range of which covers the second unwinding spindle; and
one end of the sixth bracket is mounted on the second fixing rod, the other end of the sixth bracket is provided with a radio frequency reader-writer, and a radio frequency range of which covers the third rewinding spindle.

By means of fixing rods and brackets, radio frequency reader-writers are mounted near the unwinding spindle and the rewinding spindle in the die cutting device, thereby implementing automatic identification of the radio frequency code of the cold pressed material roll used in the die cutting process and the radio frequency code of the die cut material roll produced in the die cutting process, so that the roll number of the die cutting process recorded in the manufacturing execution system can correspond to the automatically identified radio frequency codes, and ensuring the consistency between the physical material rolls in the die cutting process and the record in the manufacturing execution system.

In some embodiments of the present application, the radio frequency reader-writer mounted on the fifth bracket is configured to read the electronic tag in the cold pressed material roll on the second unwinding spindle, and transmit the read cold pressed radio frequency data to a programmable controller included in the die cutting device;
the radio frequency reader-writer mounted on the sixth bracket is configured to read the electronic tag in the die cut material roll on the third rewinding spindle, and transmit the read die cut radio frequency data to the programmable controller included in the die cutting device;
the programmable controller of the die cutting device is configured to transmit the cold pressed radio frequency data and the die cut radio frequency data to the die cutting superordinate computer; and
the die cutting superordinate computer is configured to: determine the radio frequency code of the cold pressed material roll on the second unwinding spindle based on the cold pressed radio frequency data; determine the radio frequency code of the die cut material roll based on the die cut radio frequency data; and transmit the radio frequency code of the cold pressed material roll and the radio frequency code of the die cut material roll to the manufacturing execution system.

The radio frequency data read by the radio frequency reader-writer in the die cutting device is transmitted to the die cutting superordinate computer by the programmable controller in the die cutting device, and the die cutting superordinate computer determines the radio frequency code of the corresponding material roll based on the received radio frequency data, and then uploads the determined radio frequency code to the manufacturing execution system. This realizes automatic identification and uploading of the radio frequency codes of the material rolls at the unwinding position and the rewinding position in the die cutting process, so that the accounts of the material rolls in the die cutting process recorded by the manufacturing execution system are consistent with the physical material rolls, which helps accurately trace the data and materials of the die cutting process in the subsequent data tracing process. In addition, the related operations of the die cutting process are handled by the die cutting device and its corresponding die cutting superordinate computer, so even if an abnormality occurs in the die cutting process, it will not affect the normal operation of other processes such as the coating process and the cold pressing process.

In some embodiments of the present application, the radio frequency reader-writer in the die cutting device is configured to perform a plurality of reading operations in the die cutting process, and upload the plurality of read radio frequency data to the die cutting superordinate computer via the programmable controller of the die cutting device; and
the die cutting superordinate computer is configured to select, for the radio frequency data obtained from a plurality of readings uploaded by each radio frequency reader-writer in the die cutting device, the radio frequency code that is read the largest number of times from the read radio frequency data as a finally identified radio frequency code.

Since there are many metal components in the die cutting device, radio frequency signals will be reflected on metal surfaces, so the radio frequency reader-writer performs a plurality of readings in the die cutting process, and the die cutting superordinate computer selects the radio frequency code that is read the largest number of times from the read radio frequency data, which can effectively improve the accuracy of radio frequency identification in the die cutting process.

In some embodiments of the present application, a plurality of electronic tags are mounted on an inner wall of the drum, data stored in each electronic tag includes the radio frequency code of the material roll and an identifier of the electronic tag, and a string of a first preset number of digits is the radio frequency code of the material roll; and
a portion of the plurality of electronic tags is mounted at one end of the inner wall of the drum, and another portion of the plurality of electronic tags is mounted at the other end of the inner wall of the drum.

Installing a plurality of electronic tags on the inner wall of the drum can increase the probability that the electronic tags of the material roll are located in the radio frequency range of the radio frequency reader-writer, thereby improving the probability that the radio frequency reader-writer successfully reads the electronic tags of the material roll. Especially for coated material rolls with a relatively large width, arranging a plurality of electronic tags can reduce the occurrence of radio frequency identification failures.

In some embodiments of the present application, the radio frequency identification system further includes a mounting member, the mounting member including a body, an elastic piece formed on the body, and a fixing member;
one surface of the body is an arc surface, and a card slot is provided on the other surface, the electronic tag is inserted into the card slot, and the elastic piece is in contact with and presses the electronic tag; and
the fixing member is configured to fix the mounting member on the inner wall of the drum, and the arc surface is in contact with the inner wall of the drum.

The electronic tag can be securely mounted on the drum of the material roll through the mounting member described above, making the electronic tag not prone to loosening or falling off, and facilitating disassembly or replacement of the electronic tag.

In some embodiments of the present application, the coating device, the cold pressing device, and the die cutting device each include a switch and a programmable controller; the electrode sheet production system further includes a workshop logistics and radio frequency middleware system, an automated guided vehicle system, and a warehouse management system;
in the coating device, the cold pressing device, and the die cutting device, the radio frequency reader-writer in each device is connected to the programmable controller via the switch;
a programmable logic controller of the coating device is connected to the coating superordinate computer, the programmable logic controller of the cold pressing device is connected to the cold pressing superordinate computer, and the programmable logic controller of the die cutting device is connected to the die cutting superordinate computer; and
the manufacturing execution system, the workshop logistics and radio frequency middleware system, the automated guided vehicle system, and the warehouse management system are each connected to the coating superordinate computer, the cold pressing superordinate computer, and the die cutting superordinate computer via a local area network.

In the devices of each process, the radio frequency reader-writer communicates with the programmable controller in the device via the switch, thereby implementing uploading of the automatically identified radio frequency code of the material roll to the superordinate computer corresponding to the device via the programmable controller, further uploading to the manufacturing execution system via the superordinate computer, and thus improving the operation efficiency of the entire electrode sheet production system. The communication between the superordinate computers corresponding to the devices of each process and the manufacturing execution system, the workshop logistics and radio frequency middleware system, the automated guided vehicle system, and the warehouse management system helps implement automatic flow of information in processes such as coating, cold pressing, and die cutting in electrode sheet production, thereby improving the degree of automation in electrode sheet production.

According to a second aspect of some embodiments of the present application, a control method for an electrode sheet production system is provided, applied to the electrode sheet production system described in the above first aspect, where the method includes:
in response to a coating rewinding signal, controlling a radio frequency reader-writer at a rewinding spindle of a coating process to read the radio frequency code of a coated material roll from an electronic tag of the coated material roll obtained by rewinding, and generating a coating roll number of the coated material roll;
in response to a cold pressing unwinding signal, controlling a radio frequency reader-writer at an unwinding spindle of a cold pressing process to read a radio frequency code of an unwound coated material roll from an electronic tag of the unwound coated material roll; obtaining a corresponding coating roll number based on the radio frequency code of the unwound coated material roll; and generating a cold pressing roll number based on the obtained coating roll number; and in response to a cold pressing rewinding signal, controlling a radio frequency reader-writer at a rewinding spindle of the cold pressing process to read a radio frequency code of a cold pressed material roll from an electronic tag of the cold pressed material roll obtained by rewinding; and
in response to a die cutting unwinding signal, controlling a radio frequency reader-writer at an unwinding spindle of a die cutting process to read a radio frequency code of the unwound cold pressed material roll from an electronic tag of the unwound cold pressed material roll; obtaining a corresponding cold pressing roll number based on the radio frequency code of the unwound cold pressed material roll; and generating a die cutting roll number based on the obtained cold pressing roll number; and in response to a die cutting rewinding signal, controlling a radio frequency reader-writer at a rewinding spindle of the die cutting process to read a radio frequency code of a die cut material roll from an electronic tag of the die cut material roll obtained by rewinding.

In the rewinding of the coating process, the unwinding and rewinding of the cold pressing process, and the unwinding and rewinding of the die cutting process, the radio frequency code of the material roll is automatically identified via the radio frequency reader-writer, and the roll number of each process is generated, so that the radio frequency code on the physical material roll accurately corresponds to the roll number recorded in the system, which effectively improves the consistency between the physical object and the system record, and helps improve the accuracy of subsequent data tracing. The entire electrode sheet production process requires no manual affixing of barcodes to the material rolls, reducing the manual intervention in the electrode sheet production process and improving the degree of automation in electrode sheet production.

In some embodiments of the present application, the method further includes:
in the coating process, storing a mapping relationship between the coating roll number of the coated material roll obtained by rewinding and the radio frequency code;
in the cold pressing process, storing a mapping relationship among the radio frequency code of the unwound coated material roll, the cold pressing roll number, and the radio frequency code of the cold pressed material roll obtained by rewinding; and
in the die cutting process, storing a mapping relationship among the radio frequency code of the unwound cold pressed material roll, the die cutting roll number, and the radio frequency code of the die cut material roll obtained by rewinding.

In the coating process, the cold pressing process, and the die cutting process, after automatically reading the radio frequency code of the material roll by the radio frequency reader-writer, the mapping relationship between the radio frequency code of the material roll in each process and the corresponding roll number is also stored, facilitating quick tracing to the required data in a subsequent data tracing process based on these mapping relationships. Moreover, in the mapping relationship stored in the cold pressing process, the radio frequency code of the coated material roll, the cold pressing roll number, and the radio frequency code of the produced cold pressed material roll are associated with each other, so that based on the mapping relationship, information about the cold pressed material rolls cut from the coated material roll can be inquired by using the radio frequency code of the coated material roll, and by using the radio frequency code and/or cold pressing roll number of the cold pressed material roll, it can also be inquired which coated material roll the cold pressed material roll was cut from. Similarly, in the die cutting process, the radio frequency code of the cold pressed material roll, the die cutting roll number, and the radio frequency code of the die cut material roll obtained by rewinding are associated with each other, so that information about the die cut material rolls cut from the cold pressed material roll can be inquired by using the radio frequency code of the cold pressed material roll, and by using the radio frequency code and/or die cutting roll number of the die cut material roll, it can also be inquired which cold pressed material roll the die cut material roll was die-cut from. The association between the material flows in a plurality of processes such as the coating process, the cold pressing process, and the die cutting process is implemented, so that the material information among these a plurality of processes can be traced from the coating process to the die cutting process, or from the die cutting process to the coating process, expanding the scope of data tracing in the electrode sheet production process, and improving the tracing efficiency and accuracy.

In some embodiments of the present application, a plurality of electronic tags are mounted on the coated material roll, and the reading a radio frequency code of the coated material roll includes:
based on data of the plurality of read electronic tags, counting the number of electronic tags with the same first preset number of digits; and
extracting a character sequence of the first preset number of digits from the data of the electronic tag with the largest counted number as the radio frequency code of the coated material roll.

In the coating process, a plurality of electronic tags are provided on the coated material roll. In the case where the radio frequency reader-writer reads a plurality of radio frequency codes, the radio frequency code that is read the largest number of times is taken as the radio frequency code of the coated material roll, which can effectively improve the accuracy of identifying the radio frequency code of the coated material roll in the coating process.

In some embodiments of the present application, a first radio frequency reader-writer and a second radio frequency reader-writer are respectively provided on two sides of the rewinding spindle of the cold pressing process, and a power of the first radio frequency reader-writer is greater than a power of the second radio frequency reader-writer; and the reading a radio frequency code of a cold pressed material roll includes:
selecting the radio frequency code with the strongest radio frequency signal strength from radio frequency codes read by the second radio frequency reader-writer, as the radio frequency code of the first cold pressed material roll on the rewinding spindle of the cold pressing process close to the second radio frequency reader-writer; and
excluding the radio frequency code of the first cold pressed material roll from the radio frequency codes read by the first radio frequency reader-writer, and obtaining a radio frequency code with the strongest radio frequency signal strength from the remaining radio frequency codes, as the radio frequency code of the second cold pressed material roll on the rewinding spindle of the cold pressing process close to the first radio frequency reader-writer.

A first radio frequency reader-writer and a second radio frequency reader-writer are respectively provided on two sides of the rewinding spindle in the cold pressing process, the second radio frequency reader-writer is closer to the cold pressed material roll and has a relatively small power, so the second radio frequency reader-writer also has a smaller radio frequency range, which helps read the electronic tag of the cold pressed material roll closer to the second radio frequency reader-writer and reduces interference from the electronic tag of the cold pressed material roll farther away. The radio frequency range of the first radio frequency reader-writer is larger, which may read the electronic tags of all cold pressed material rolls on the rewinding spindle. The radio frequency code of the first cold pressed material roll identified by the second radio frequency reader-writer is excluded from the radio frequency codes read by the first radio frequency reader-writer, and the radio frequency code with the strongest radio frequency signal is then selected from the remaining radio frequency codes as the radio frequency code of the second cold pressed material roll. In this way, the radio frequency code of each cold pressed material roll on the rewinding spindle of the cold pressing process can be accurately read.

In some embodiments of the present application, the reading a radio frequency code of a die cut material roll includes:
controlling the radio frequency reader-writer at the rewinding spindle of the die cutting process to perform a plurality of reading operations on the electronic tag of the die cut material roll obtained by rewinding; and
determining the radio frequency code that is read the largest number of times as the radio frequency code of the die cut material roll.

Automatic identification of the radio frequency code of the die cut material roll produced in the die cutting process is implemented, and a plurality of readings are performed and the radio frequency code with the strongest radio frequency signal is selected, thereby improving the reading accuracy of the die cutting process.

In some embodiments of the present application, in the coating process, in response to a rewinding end signal triggered by a cutter, a first-side coating production amount of a target coated material roll currently obtained by rewinding is obtained;
the first-side coating production amount is recorded in roll information corresponding to the coating roll number of the target coated material roll;
upon receiving a first-side data collection end instruction, determining that first-side coating of the target coated material roll is completed;
controlling a coating device to perform a coating operation on a second side of the target coated material roll, the second side being the other side opposite to the first side; and
upon receiving a second-side data collection end instruction, determining that coating of the target coated material roll is completed.

Through the above method in the coating process, the production amount of the coated material roll is automatically recorded and stored in the roll information corresponding to the coating roll number. After completion of the first-side coating, the coating operation on the second side is automatically controlled, and the entire process is automated, reducing the manual intervention and improving the automation and coating efficiency of the coating process.

In some embodiments of the present application, the method further includes:
in the cold pressing process, upon detecting a rewinding end signal of the last splitting rewinding corresponding to a currently unwound coated material roll, obtaining a current account quantity corresponding to the currently unwound coated material roll; and
calculating a ratio of the current account quantity to the number of rolls of each target cold pressed material roll, using the ratio as an account production amount of each target cold pressed material roll, and storing the account production amount of each target cold pressed material roll in roll information corresponding to the cold pressing roll number of each target cold pressed material roll.

In the cold pressing process, based on the current account quantity of the unwound coated material roll, the splitting calculation of the production amounts of respective cold pressed material rolls obtained by the last splitting rewinding is automatically performed, improving the accuracy of the production amount recording of the cold pressed material roll.

In some embodiments of the present application, the method further includes:
in response to the rewinding end signal of the last splitting rewinding, obtaining a current physical quantity corresponding to the currently unwound coated material roll;
under the condition that the current account quantity is less than the current physical quantity, in response to entering the die cutting process, calculating an actual production amount of each target cold pressed material roll based on the current physical quantity and the number of rolls of each target cold pressed material roll; and
in roll information corresponding to the die cutting roll number, modifying the account production amount of each target cold pressed material roll to the actual production amount of each target cold pressed material roll, respectively.

In the process of the last splitting of the coated material roll, if the current account quantity of the coated material roll is less than the current physical quantity, then upon entering the die cutting process, the actual production amount of each target cold pressed material roll is calculated based on the current physical quantity and the number of target cold pressed material rolls, and the account production amount of each cold pressed material roll is adjusted to the actual production amount, so that the account production amount of the cold pressed material roll unwound in the die cutting process is consistent with the actual situation, which helps improve the consistency between the accounts and the actual objects in material roll accounting in the die cutting process.

In some embodiments of the present application, the method further includes:
in response to a rewinding end signal in the die cutting process, obtaining a current account quantity and a current physical quantity of a currently unwound cold pressed material roll;
under the condition that the current physical quantity is less than or equal to the current account quantity, calculating a first ratio between the current physical quantity and the number of rolls of each die cut material roll, and storing the first ratio as an account production amount of each die cut material roll in roll information corresponding to the die cutting roll number of each die cut material roll; and
under the condition that the current physical quantity is greater than the current account quantity, modifying the current account quantity of the currently unwound cold pressed material roll recorded in the system to the current physical quantity, calculating a second ratio between the modified current account quantity and the number of rolls of each die cut material roll, and storing the second ratio as an account production amount of each die cut material roll in roll information corresponding to the die cutting roll number of each die cut material roll.

In the die cutting process, the account production amount of the die cut material roll is calculated based on the current physical quantity, making the account production amount of the die cut material roll closer to the real actual production amount, improving the accuracy of the account production amount of the die cut material roll recorded in the die cutting process.

The above description is merely an overview of the technical solutions of the embodiments of the present application. In order to more clearly understand the technical means of the embodiments of the present application and to implement them in accordance with the content of the specification, and to make the above and other objects, features, and advantages of the embodiments of the present application more obvious and easy to understand, specific implementations of the present application are set forth below in detail.

### BRIEF DESCRIPTION OF THE DRAWINGS

By reading the detailed description of the embodiments below, various other advantages and benefits will become clear to those of ordinary skill in the art. The accompanying drawings are only for the purpose of illustrating the embodiments of the present application and are not considered as limitations to the present application. Moreover, in all the drawings, the same reference signs denote the same components. In the drawings:
FIG. 1 is a schematic structural diagram of an electrode sheet production system according to one or more embodiments of the present application;
FIG. 2 is a schematic structural diagram of coating rewinding in a coating device according to one or more embodiments of the present application;
FIG. 3A is a schematic structural diagram of cold pressing unwinding in a cold pressing device according to one or more embodiments of the present application;
FIG. 3B is a schematic structural diagram of cold pressing rewinding in a cold pressing device according to one or more embodiments of the present application;
FIG. 4 is a schematic structural diagram of die cutting unwinding and die cutting rewinding in a die cutting device according to one or more embodiments of the present application;
FIG. 5 is a schematic structural diagram of a mounting member according to one or more embodiments of the present application and a diagram showing the effect of installing an electronic tag on an inner wall of a drum through the mounting member;
FIG. 6 is another schematic structural diagram of an electrode sheet production system according to one or more embodiments of the present application;
FIG. 7 is a schematic flowchart of a control method for an electrode sheet production system according to one or more embodiments of the present application;
FIG. 8 is a schematic diagram of an electrode sheet production process according to one or more embodiments of the present application; and
FIG. 9 is a schematic diagram of a network architecture of an electrode sheet production system according to one or more embodiments of the present application.

### DESCRIPTION OF EMBODIMENTS

The embodiments of the technical solutions of the present application will be described in detail below in conjunction with the accompanying drawings. The following embodiments are only used to more clearly illustrate the technical solutions of the present application and are therefore provided as examples, and shall not be construed as limiting the protection scope of the present application.

Unless otherwise defined, all technical and scientific terms used herein have the same meaning as commonly understood by one of ordinary skill in the art to which this application belongs. The terms used herein are for the purpose of describing specific embodiments only and are not intended to limit the present application. The terms "including" and "having" and any variations thereof in the specification and claims of the present application and the above description of the drawings are intended to cover non-exclusive inclusions.

In the description of the embodiments of the present application, technical terms such as "first" and "second" are used only to distinguish different objects and should not be understood as indicating or implying relative importance or implicitly indicating the number, specific order, or primary and secondary relationship of the indicated technical features. In the description of the embodiments of the present application, the meaning of "plurality of" is two or more, unless otherwise specifically and clearly defined.

As used herein, "embodiment" means that a particular feature, structure, or characteristic described in conjunction with the embodiment can be included in at least one embodiment of the present application. The appearance of the phrase at various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of the embodiments of the present application, the term "and/or" is merely an association describing associated objects, indicating that three relationships can exist, for example, A and/or B can indicate: A exists alone, A and B exist simultaneously, and B exists alone. In addition, the character "/" herein generally indicates that the associated objects before and after are in an "or" relationship.

In the description of the embodiments of the present application, the term "plurality" refers to two or more (including two), similarly, "plurality of groups" refers to two or more groups (including two groups), and "plurality of sheets" refers to two or more sheets (including two sheets).

At present, batteries have been widely used in many fields, such as electric transportation and energy storage systems, all require the use of batteries. Among the components of the battery, the positive and negative electrode sheets have a great influence on the energy density, performance, and cost of the battery. Under the condition that quality issues arise with the battery, it is often necessary to trace back which coated material roll the electrode sheet of the battery was produced from, and which batteries the coated material roll was used to produce. Therefore, it is necessary to accurately record the flow of materials during the electrode sheet production process to facilitate subsequent data tracing.

Electrode sheet production includes a plurality of processes such as coating, cold pressing, and die cutting. In the coating process, the coating equipment uniformly coats slurry on a surface of the current collector and dries the slurry, and the obtained electrode sheet is wound on a drum to obtain a coated material roll. In the cold pressing process, the electrode sheet of the coated material roll is cold pressed, and the coated material roll with a relatively large width is cut into a plurality of cold pressed material rolls with relatively smaller widths. In the die cutting process, a cold pressed material roll is further cut, and one cold pressed material roll is cut into a plurality of die cut material rolls with even smaller widths.

In the related art, in the coating process, a manufacturing execution system automatically generates a coating roll number for a coated material roll, and establishes a mapping relationship between the coating roll number and roll information corresponding to the coated material roll, where the roll information includes but is not limited to electrode sheet width, length, production time, current collector material category, slurry material category, coating thickness, and the like. The manufacturing execution system calls a printing device based on the coating roll number of the coated material roll to print a barcode, where the barcode includes the coating roll number. Workshop technicians affix the barcode to the coated material roll. In the cold pressing process, after a coated material roll is mounted on the cold pressing device, the barcode on the coated material roll is scanned to identify the coating roll number included in the barcode, and a mapping relationship between the coating roll number and the related roll information of the cold pressed material roll produced in the cold pressing process is established. A barcode including a cold pressing roll number is also affixed to the cold pressed material roll by workshop technicians, and data processing in subsequent cold pressing and die cutting processes is similar to that in the coating process.

In the above process, workshop technicians affix barcodes containing roll numbers to the material rolls to correspond the physical material rolls to the material rolls recorded in the manufacturing execution system. However, the manual method of affixing barcodes is prone to problems such as uneven affixing leading to unreadable barcodes later, or even errors such as affixing a barcode of material roll A to material roll B, resulting in inability of the roll number contained in the barcode on the material roll to be consistent with the roll number recorded in the manufacturing execution system, which makes it impossible to trace the correct data during subsequent data tracing.

Based on this, embodiments of the present application provide an electrode sheet production system, in which a radio frequency identification system is added to an original electrode sheet production system. For production devices used in different processes of electrode sheet production such as the coating device, cold pressing device, and die cutting device, radio frequency reader-writers are provided near the spindles for installing material rolls in these devices, and electronic tags are mounted on the drums of the material rolls, with the radio frequency codes of the material rolls stored in the electronic tags. During the electrode sheet production process, the radio frequency code stored in the electronic tag of the material roll is read by the radio frequency reader-writer, and the radio frequency code is automatically transmitted to the manufacturing execution system.

Based on the above electrode sheet production system, there is no need to manually affix barcodes to the material rolls. Radio frequency codes of the material rolls can be automatically uploaded to the manufacturing execution system via the radio frequency identification system, so that the manufacturing execution system establishes a mapping relationship between a radio frequency code of the material roll and a roll number, ensuring that the radio frequency code on the physical material roll accurately corresponds to the roll number recorded in the manufacturing execution system, and ensuring the consistency between the physical object and the system record, so as to improve the accuracy of subsequent data tracing. Moreover, the manual intervention in the electrode sheet production process is reduced, and the degree of automation in electrode sheet production is improved.

The electrode sheet production system provided by embodiments of the present application can be used to produce electrode sheets for batteries of any type, such as electrode sheets for batteries of different chemical material systems such as lithium iron phosphate batteries and ternary lithium batteries. The system may also be extended to the battery field or other fields to produce products that include any processes such as coating and cutting.

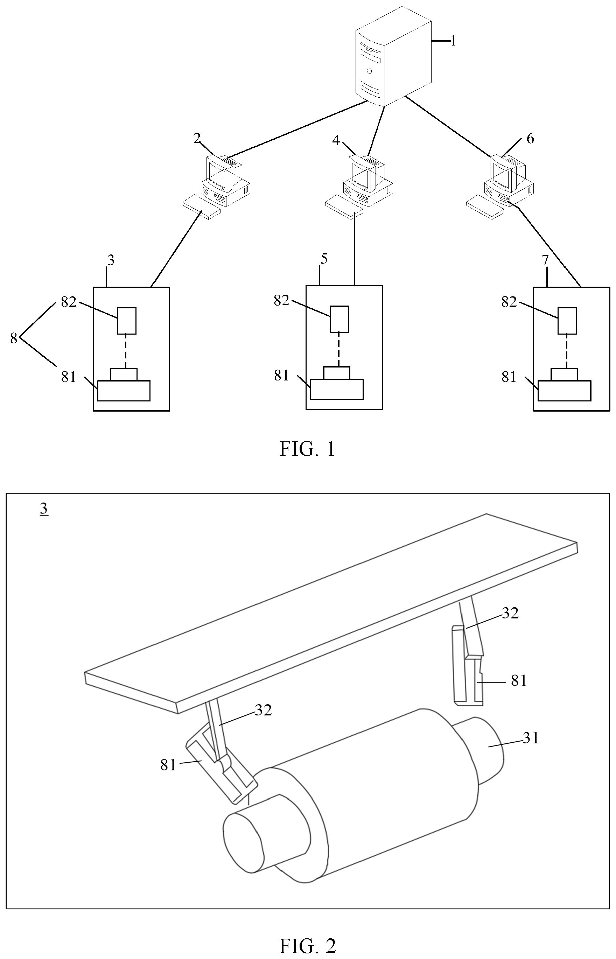

Referring to FIG. 1, some embodiments of the present application provide an electrode sheet production system, including: a manufacturing execution system 1, a coating superordinate computer 2, a coating device 3, a cold pressing superordinate computer 4, a cold pressing device 5, a die cutting superordinate computer 6, and a die cutting device 7, where the coating device 3, the cold pressing device 5, and the die cutting device 7 are each provided with a radio frequency identification system 8; and the radio frequency identification system 8 includes a radio frequency reader-writer 81 and an electronic tag 82; and
the manufacturing execution system 1 is connected to the coating superordinate computer 2, the cold pressing superordinate computer 4, and the die cutting superordinate computer 6; the coating superordinate computer 2 is connected to the coating device 3, the cold pressing superordinate computer 4 is connected to the cold pressing device 5, and the die cutting superordinate computer 6 is connected to the die cutting device 7; in the coating device 3, the cold pressing device 5, and the die cutting device 7, the radio frequency reader-writer 81 is mounted on at least one side of a spindle for placing a material roll, and the electronic tag 82 is mounted on a drum of the material roll; the radio frequency reader-writer 81 is configured to read a radio frequency code of the material roll from the electronic tag 82 of the material roll on the spindle, and transmit the radio frequency code to the manufacturing execution system 1.

The dashed line between the radio frequency reader-writer 81 and the electronic tag 82 in FIG. 1 indicates a radio frequency communication connection.

In some embodiments of the present application, the manufacturing execution system 1 may include an MES (Manufacturing Execution System, manufacturing execution system) system. The manufacturing execution system 1, the coating superordinate computer 2, the coating device 3, the cold pressing superordinate computer 4, the cold pressing device 5, the die cutting superordinate computer 6, and the die cutting device 7 are usually deployed in the same factory or the same workshop, located in the same local area network, may communicate with each other via the local area network, or may communicate with each other via a wireless communication manner such as Wi-Fi or Bluetooth.

The coating device 3, the cold pressing device 5, and the die cutting device 7 each include a spindle for installing a material roll, and during the production process, the material roll is sleeved on the spindle. An electronic tag 82 is mounted on the drum of the material roll. The electronic tag 82 is a data carrier of RFID (Radio Frequency Identification, radio frequency identification) technology, and data can be stored in the electronic tag 82. In embodiments of the present application, the radio frequency code is stored in the electronic tag 82. Non-contact data communication can be performed between the electronic tag 82 and the radio frequency reader-writer 81 through wireless RFID. The radio frequency reader-writer 81 provided on one side of the spindle can read the radio frequency code stored in the electronic tag 82.

The radio frequency code is a character sequence pre-written into the electronic tag 82 for uniquely identifying the material roll where the electronic tag 82 is located. The character sequence of the radio frequency code may include characters for identifying the current collector category, characters for identifying the coated slurry category, characters for identifying the manufacturer of the material roll, and the like, and the radio frequency codes stored in the electronic tags 82 mounted on different material rolls are all different.

After the radio frequency reader-writer 81 reads the radio frequency data from the electronic tag 82, the radio frequency data is transmitted to the superordinate computer connected to the device where the radio frequency reader-writer 81 is located via the device, and the superordinate computer extracts the radio frequency code of the material roll from the radio frequency data, and then transmits the radio frequency code to the manufacturing execution system 1.

The coating device 3 is configured to perform a coating process in an electrode sheet production process. The coating device 3 is configured to uniformly coat slurry on the current collector and dry the slurry to form positive and negative electrode sheets. The coating device 3 outputs a coated material roll, which is obtained by winding the positive electrode sheet or negative electrode sheet on a drum.

In the coating process, a radio frequency reader-writer 81 is disposed at the rewinding position in the coating device 3, the radio frequency reader-writer 81 reads the electronic tag 82 of the coated material roll on the rewinding spindle, transmits the read radio frequency data to the coating superordinate computer 2 via the coating device 3, the coating superordinate computer 2 extracts a radio frequency code of the coated material roll from the radio frequency data, and then uploads the radio frequency code to the manufacturing execution system 1.

The cold pressing device 5 is configured to perform a cold pressing process in the electrode sheet production process. The cold pressing device 5 includes a rolling device and a pre-slitting device, where the rolling device is configured to further compact the coated electrode sheet, and the pre-slitting device is configured to continuously longitudinally slit a wider full-roll electrode sheet into several narrow sheets with required widths, that is, to cut the wider coated material roll into a plurality of cold pressed material rolls with relatively smaller widths.

In the cold pressing process, a radio frequency reader-writer 81 is disposed at an unwinding position in the cold pressing device 5, and the radio frequency reader-writer 81 reads an electronic tag 82 of a coated material roll on an unwinding spindle. A radio frequency reader-writer 81 is also disposed at a rewinding position in the cold pressing device 5 for reading an electronic tag 82 of a cold pressed material roll on a rewinding spindle. The radio frequency reader-writers 81 at both the unwinding position and the rewinding position transmit the read radio frequency data to the cold pressing superordinate computer 4 via the cold pressing device 5. The cold pressing superordinate computer 4 respectively extracts the radio frequency code of the unwound coated material roll and the radio frequency code of the rewound cold pressed material roll from the received radio frequency data, and uploads the screened radio frequency codes to the manufacturing execution system 1.

The die cutting device 7 is configured to perform a die cutting process in the electrode sheet production process. The die cutting device 7 is configured to punch and mold the electrode sheet of the cold pressed material roll obtained in the cold pressing process to obtain a plurality of die cut material rolls for subsequent processes.

In the die cutting process, a radio frequency reader-writer 81 is disposed at an unwinding position in the die cutting device 7, and the radio frequency reader-writer 81 reads an electronic tag 82 of a cold pressed material roll on an unwinding spindle. A radio frequency reader-writer 81 is also disposed at a rewinding position in the die cutting device 7 for reading an electronic tag 82 of a die cut material roll on a rewinding spindle. The radio frequency reader-writers 81 at both the unwinding position and the rewinding position transmit the read radio frequency data to the die cutting superordinate computer 6 via the die cutting device 7. The die cutting superordinate computer 6 respectively extracts the radio frequency code of the unwound cold pressed material roll and the radio frequency code of the rewound die cut material roll from the received radio frequency data, and uploads the screened radio frequency codes to the manufacturing execution system 1.

In this way, there is no need to manually affix barcodes to the material rolls. A radio frequency code of a material roll can be automatically uploaded to the manufacturing execution system 1 via the radio frequency identification system 8 in each process. The manufacturing execution system 1 establishes a mapping relationship between the radio frequency code of the material roll and a roll number, so that the radio frequency code on a physical material roll can accurately correspond to the roll number recorded in the manufacturing execution system 1, effectively improving the consistency between the physical object and the system record, and helping improve the accuracy of subsequent data tracing. Moreover, the manual intervention in the electrode sheet production process is reduced, and the degree of automation in electrode sheet production is improved.

Furthermore, in this electrode sheet production system, the coating device, the cold pressing device, and the die cutting device each have a respective corresponding superordinate computer. Such a distributed deployment manner decouples the data communication and processing among the various processes of the electrode sheet production system, so that even if an abnormality occurs in one process, the normal operation of other processes will not be affected.

In some embodiments of the present application, as shown in FIG. 2, the coating device 3 includes a first rewinding spindle 31 for installing a coated material roll and a first bracket 32 provided on at least one side of the first rewinding spindle 31; the radio frequency reader-writer 81 is mounted on at least one bracket of each first bracket 32, and a radio frequency range of the radio frequency reader-writer 81 covers one first rewinding spindle 31.

FIG. 2 only schematically shows the installation positional relationship of the first rewinding spindle 31, the first bracket 32, and the radio frequency reader-writer 81. Other portions included in the coating device 3 are not shown in FIG. 2. FIG. 2 schematically shows two first brackets 32 and two radio frequency reader-writers 81, and other numbers are also possible in actual applications.

One radio frequency reader-writenutsr 81 may be disposed on either axial side of the first rewinding spindle 31, or one radio frequency reader-writer 81 may be disposed on both axial sides. The radio frequency reader-writer 81 may be fixedly mounted on the bracket via structures such as screws and nuts.

In the electrode sheet production process, model selection of the radio frequency reader-writer 81 and design of the bracket for installing the radio frequency reader-writer 81 are performed according to the actual situation of the production device in each process. In the coating process, the material roll is large, the reading distance is long, and in a case of a plurality of spindles, the distance between adjacent material rolls is short, which is prone to cross-reading. Under such circumstances, the radio frequency reader-writer 81 may adopt a reader-writer with a narrow beam antenna, and the narrow beam antenna can better constrain the reading range of the radio frequency reader-writer 81 within a smaller angular range, for example, constraining the reading range within a 45° or 50° angular range with the radio frequency reader-writer 81 as the vertex. In the case where radio frequency reader-writers 81 are disposed on two sides of the first rewinding spindle 31, it is intended to adapt to the feature that the coated material roll has a wide width, and disposing one radio frequency reader-writer 81 on each side can improve the accuracy of radio frequency code reading.

The coating device 3 may include only one first rewinding spindle 31, and a drum is sleeved on the first rewinding spindle 31, and the produced electrode sheet is wound on the drum to form a coated material roll. In other embodiments, the coating device 3 may also include two or more first rewinding spindles 31, drums may be sleeved on the plurality of first rewinding spindles 31, and after the drums on the first rewinding spindle 31 in the rewinding state complete rewinding, another first rewinding spindle 31 may be adjusted to the rewinding state. The radio frequency range of the radio frequency reader-writer 81 covers one first rewinding spindle 31, and may cover only the first rewinding spindle 31 in the rewinding state.

The radio frequency reader-writer 81 is disposed at the first rewinding spindle 31 of the coating device 3, thereby implementing automatic identification of the radio frequency code of the coated material roll, which helps make the physical coated material roll actually produced correspond one-to-one with the roll number of the coated material roll recorded in the manufacturing execution system 1, reducing the inconsistency between the physical coated material roll and the roll number recorded in the manufacturing execution system 1. The radio frequency range of the radio frequency reader-writer 81 covers one first rewinding spindle 31, thereby reading only the electronic tag 82 of the material roll on the said first rewinding spindle 31 and reducing interference from material rolls on other first rewinding spindles 31.

In some embodiments of the present application, the radio frequency reader-writer 81 mounted on the first bracket 32 is configured to read the electronic tag 82 in the coated material roll on the first rewinding spindle 31, and transmit the read coated radio frequency data to a programmable controller included in the coating device 3;
the programmable controller of the coating device 3 is configured to transmit the coated radio frequency data to the coating superordinate computer 2; and
the coating superordinate computer 2 is configured to determine a radio frequency code of the coated material roll based on the coated radio frequency data, and transmit the radio frequency code of the coated material roll to the manufacturing execution system 1.

In the coating process, the electronic tag 82 on the coated material roll can be automatically read through the radio frequency reader-writer 81, and the read data is automatically uploaded to the coating superordinate computer 2 via the programmable controller in the coating device 3. The coating superordinate computer 2 extracts the radio frequency code of the coated material roll from the coated radio frequency data read by the radio frequency reader-writer 81 and uploads the radio frequency code to the manufacturing execution system 1. The entire process requires no manual intervention, implementing automatic identification and uploading of the radio frequency code of the coated material roll, thereby helping the manufacturing execution system 1 perform recording of the coated material roll based on the radio frequency code of the coated material roll, and ensuring the consistency between the physical coated material roll in the coating process and the record in the manufacturing execution system 1.

In some embodiments of the present application, the coating superordinate computer 2 is configured to extract a plurality of radio frequency codes from the coated radio frequency data; count the number of radio frequency codes with the same first preset number of digits based on the plurality of radio frequency codes; and determine the radio frequency code with the largest counted number as the radio frequency code of the coated material roll.

Since the coated material roll is large, in order to improve the reading accuracy of the electronic tag 82 mounted on the same coated material roll, a plurality of electronic tags 82 may be mounted on the inner wall of the drum of the coated material roll. Data stored in the plurality of electronic tags 82 provided on the coated material roll has the same first preset number of digits for representing the radio frequency code of the coated material roll, and different subsequent number of digits for identifying each electronic tag 82. Under the condition that a plurality of electronic tags 82 are provided in the coated material roll, data of a plurality of electronic tags 82 may be read each time the electronic tags 82 on the coated material roll are read by the radio frequency reader-writer 81. In some other embodiments, in the coating process, the radio frequency reader-writer 81 at the first rewinding spindle 31 in the coating device 3 may also be controlled to perform a plurality of reading operations.

The coating superordinate computer 2 determines the number of radio frequency codes with the same first preset number of digits from the coated radio frequency data read by the radio frequency reader-writer 81, and determines the radio frequency code with the largest number as the radio frequency code of the coated material roll. That is, the radio frequency code that is read the largest number of times is adopted as the radio frequency code of the coated material roll, which improves the accuracy of radio frequency code reading.

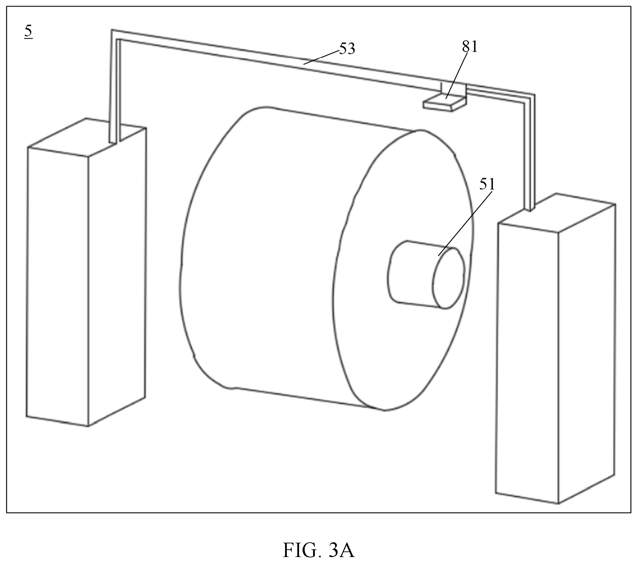

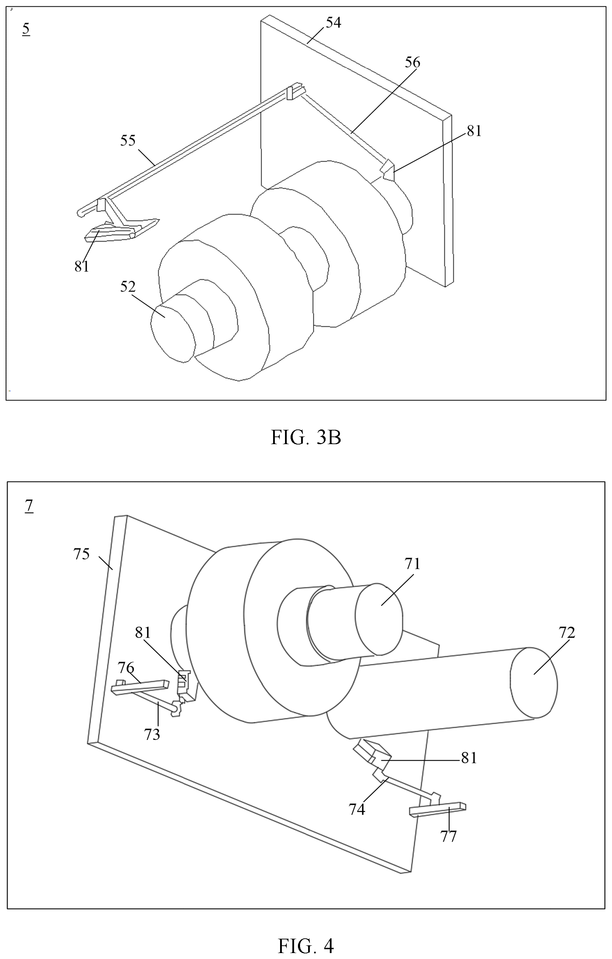

In some embodiments of the present application, as shown in FIG. 3A and FIG. 3B, the cold pressing device 5 includes a first unwinding spindle 51 for installing a coated material roll and a second rewinding spindle 52 for installing a cold pressed material roll; where
as shown in FIG. 3A, at least one side of the first unwinding spindle 51 is provided with a second bracket 53, and the radio frequency reader-writer 81 is mounted on at least one bracket of each second bracket 53; and
as shown in FIG. 3B, one end of the second rewinding spindle 52 is mounted on a first side surface of a first support plate 54, a third bracket 55 and a fourth bracket 56 are also mounted on the first side surface, one end of the third bracket 55 is mounted on the first side surface, and an end of the third bracket 55 away from the first side surface is provided with a radio frequency reader-writer 81; and one end of the fourth bracket 56 is connected to an end of the third bracket 55 close to the first side surface, one side surface of the fourth bracket 56 is connected to the first support plate 54, an end portion of the other end of the fourth bracket 56 is close to a position at which the second rewinding spindle 52 is connected to the first support plate 54, and the other end of the fourth bracket 56 is provided with a radio frequency reader-writer 81; and a power of the radio frequency reader-writer 81 on the third bracket 55 is greater than a power of the radio frequency reader-writer 81 on the fourth bracket 56.

FIG. 3A shows a schematic structural diagram related to unwinding in the cold pressing device 5, and FIG. 3B shows a schematic structural diagram related to rewinding. Other structures included in the cold pressing device 5 are not shown in FIG. 3A and FIG. 3B.

In the cold pressing device 5, the coated material roll is disposed at the first unwinding spindle 51, and a plurality of cold pressed material rolls finally obtained by slitting after processing by the cold pressing device 5 are disposed at the second rewinding spindle 52. Therefore, the model, radio frequency range and other parameters of the radio frequency reader-writer 81 disposed at the first unwinding spindle 51 may be the same as those of the radio frequency reader-writer 81 disposed at the first rewinding spindle 31 in the coating device 3, and may also be set differently.

Since a plurality of cold pressed material rolls will be cut in the cold pressing process, a plurality of cold pressed material rolls may be sleeved on one second rewinding spindle 52, so the radio frequency reader-writer 81 at the second rewinding spindle 52 may need to read electronic tags 82 of a plurality of cold pressed material rolls. To improve the reading accuracy, radio frequency reader-writers 81 are respectively provided on two sides of the second rewinding spindle 52, and the powers of the radio frequency reader-writers 81 on both sides are different, with the power on one side being greater than the power on the other side.

As shown in FIG. 3B, the radio frequency reader-writer 81 on the fourth bracket 56 is closer to the cold pressed material roll and has a relatively small power, so such radio frequency reader-writer 81 also has a smaller radio frequency range, which helps read the electronic tag 82 of the cold pressed material roll closer to the fourth bracket 56 and reduces interference from the electronic tag 82 of the cold pressed material roll farther from the fourth bracket 56. The low-power radio frequency reader-writer 81 on the fourth bracket 56 has high reading accuracy. The high-power radio frequency reader-writer 81 on the third bracket 55 has a larger radio frequency range, and may read the electronic tags 82 of all cold pressed material rolls on the second rewinding spindle 52. The radio frequency code read by the radio frequency reader-writer 81 on the fourth bracket 56 may be first excluded from the radio frequency codes read by the radio frequency reader-writer 81 on the third bracket 55, and then the radio frequency code with the strongest radio frequency signal is selected from the remaining radio frequency codes as the radio frequency code of the cold pressed material roll. In this way, the radio frequency code of each cold pressed material roll on the second rewinding spindle 52 can be accurately read through the two radio frequency reader-writers 81 on the third bracket 55 and the fourth bracket 56.

The above strongest radio frequency signal may be determined in the following manner: the radio frequency reader-writer 81 performs reading once every certain time interval, and after a preset time period, selects the radio frequency code that is read the largest number of times from all the read radio frequency codes as the radio frequency code with the strongest radio frequency signal.

In some embodiments of the present application, the radio frequency reader-writer 81 mounted on the second bracket 53 is configured to read the electronic tag 82 in the coated material roll on the first unwinding spindle 51, and transmit the read coated radio frequency data to a programmable controller included in the cold pressing device 5;
the radio frequency reader-writers 81 mounted on the third bracket 55 and the fourth bracket 56 are configured to read the electronic tag 82 in the cold pressed material roll on the second rewinding spindle 52, and transmit the read cold pressed radio frequency data to the programmable controller included in the cold pressing device 5;
the programmable controller of the cold pressing device 5 is configured to transmit the coated radio frequency data and the cold pressed radio frequency data to the cold pressing superordinate computer 4; and
the cold pressing superordinate computer 4 is configured to: determine a radio frequency code of the coated material roll on the first unwinding spindle 51 based on the coated radio frequency data; determine the radio frequency code of the cold pressed material roll based on the cold pressed radio frequency data; and transmit the radio frequency code of the coated material roll and the radio frequency code of the cold pressed material roll to the manufacturing execution system 1.

In the cold pressing process, the electronic tag 82 on the unwound coated material roll can be automatically read by the radio frequency reader-writer 81 at the cold pressing unwinding position, and the electronic tag 82 on the cold pressed material roll obtained by rewinding can be automatically read through the radio frequency reader-writer 81 at the cold pressing rewinding position. The read data is automatically uploaded to the cold pressing superordinate computer 4 by the programmable controller in the cold pressing device 5. The cold pressing superordinate computer 4 extracts the radio frequency code of the unwound coated material roll from the read coated radio frequency data, extracts the radio frequency code of each cold pressed material roll obtained by rewinding from the cold pressed radio frequency data, and uploads the radio frequency codes to the manufacturing execution system 1. The entire process requires no manual intervention, implementing automatic identification and uploading of the radio frequency codes of a plurality of material rolls in unwinding and rewinding in the cold pressing process, which helps the manufacturing execution system 1 record the material rolls based on the radio frequency codes of the material rolls, and ensures the consistency between the physical material rolls in the cold pressing process and the record in the manufacturing execution system 1.

In some embodiments of the present application, the cold pressing superordinate computer 4 is configured to obtain the radio frequency code with the strongest signal strength from the cold pressed radio frequency data transmitted by the radio frequency reader-writer 81 on the fourth bracket 56, as the radio frequency code of a first cold pressed material roll on the second rewinding spindle 52 close to the fourth bracket 56; and exclude the radio frequency code of the first cold pressed material roll from the cold pressed radio frequency data transmitted by the radio frequency reader-writer 81 on the third bracket 55, and obtain the radio frequency code with the strongest signal strength from the remaining cold pressed radio frequency data, as the radio frequency code of a second cold pressed material roll on the second rewinding spindle 52 close to the third bracket 55.

Since a plurality of cold pressed material rolls will be cut in the cold pressing process, a plurality of cold pressed material rolls may be sleeved on one second rewinding spindle 52, so the radio frequency reader-writer 81 at the second rewinding spindle 52 may need to read electronic tags 82 of a plurality of cold pressed material rolls. One radio frequency reader-writer 81 is provided on each of two sides of the second rewinding spindle 52, where the radio frequency reader-writer 81 on the fourth bracket 56 is closer to the cold pressed material roll, and the power of the radio frequency reader-writer 81 is relatively small, so such radio frequency reader-writer also has a smaller radio frequency range, which helps read the electronic tag 82 of the cold pressed material roll closer to the radio frequency reader-writer 81 and reduces interference from the electronic tag of the cold pressed material roll farther away. The radio frequency reader-writer 81 on the third bracket 55 has a larger radio frequency range, so such radio frequency reader-writer may read the electronic tags 82 of all cold pressed material rolls on the second rewinding spindle 52. First, the radio frequency code read by the radio frequency reader-writer is excluded from the radio frequency codes read by the radio frequency reader-writer 81 on the third bracket 55, and then the radio frequency code with the strongest radio frequency signal is selected from the remaining radio frequency codes. In this way, the radio frequency code of each cold pressed material roll on the second rewinding spindle can be accurately read.

In some embodiments of the present application, as shown in FIG. 4, the die cutting device 7 includes a second unwinding spindle 71 for installing a cold pressed material roll, a third rewinding spindle 72 for installing a die cut material roll, a fifth bracket 73, a sixth bracket 74, a second support plate 75, a first fixing rod 76, and a second fixing rod 77; one end of the second unwinding spindle 71, one end of the third rewinding spindle 72, one end of the first fixing rod 76, and one end of the second fixing rod 77 are all mounted on a first side surface of the second support plate 75; one end of the fifth bracket 73 is mounted on the first fixing rod 76, the other end of the fifth bracket 73 is provided with a radio frequency reader-writer 81, and a radio frequency range of which covers the second unwinding spindle 71; and one end of the sixth bracket 74 is mounted on the second fixing rod 77, the other end of the sixth bracket 74 is provided with a radio frequency reader-writer 81, and a radio frequency range of which covers the third rewinding spindle 72.

Radio frequency reader-writers 81 are disposed at both the unwinding and rewinding positions of the die cutting device 7, implementing automatic identification of the radio frequency code of the cold pressed material roll used in the die cutting process and the radio frequency code of the produced die cut material roll, so that the roll number of the die cutting process recorded in the manufacturing execution system 1 can correspond to the above automatically identified radio frequency codes, ensuring the consistency between the physical material rolls in the die cutting process and the record in the manufacturing execution system 1.

In some embodiments of the present application, the radio frequency reader-writer 81 mounted on the fifth bracket 73 is configured to read the electronic tag 82 in the cold pressed material roll on the second unwinding spindle 71, and transmit the read cold pressed radio frequency data to a programmable controller included in the die cutting device 7; the radio frequency reader-writer 81 mounted on the sixth bracket 74 is configured to read the electronic tag 82 in the die cut material roll on the third rewinding spindle 72, and transmit the read die cut radio frequency data to the programmable controller included in the die cutting device 7;
the programmable controller of the die cutting device 7 is configured to transmit the cold pressed radio frequency data and the die cut radio frequency data to the die cutting superordinate computer 6; and
the die cutting superordinate computer 6 is configured to: determine the radio frequency code of the cold pressed material roll on the second unwinding spindle 71 based on the cold pressed radio frequency data; determine the radio frequency code of the die cut material roll based on the die cut radio frequency data; and transmit the radio frequency code of the cold pressed material roll and the radio frequency code of the die cut material roll to the manufacturing execution system 1.

The radio frequency data read by the radio frequency reader-writer 81 in the die cutting device 7 is transmitted to the die cutting superordinate computer 6 by the programmable controller in the die cutting device 7, and the die cutting superordinate computer 6 determines the radio frequency code of the corresponding material roll based on the received radio frequency data, and then uploads the determined radio frequency code to the manufacturing execution system 1. This realizes automatic identification and uploading of the radio frequency codes of the material rolls at the unwinding position and the rewinding position in the die cutting process, so that the accounts of the material rolls in the die cutting process recorded by the manufacturing execution system 1 are consistent with the physical material rolls, which helps accurately trace the data and materials of the die cutting process in the subsequent data tracing process. In addition, the related operations of the die cutting process are handled by the die cutting device 7 and its corresponding die cutting superordinate computer 6, so even if an abnormality occurs in the die cutting process, it will not affect the normal operation of other processes such as the coating process and the cold pressing process.

In some embodiments of the present application, the radio frequency reader-writer 81 in the die cutting device 7 is configured to perform a plurality of reading operations in the die cutting process, and upload the plurality of read radio frequency data to the die cutting superordinate computer 6 through the programmable controller of the die cutting device 7; and the die cutting superordinate computer 6 is configured to select, for the radio frequency data obtained from a plurality of readings uploaded by each radio frequency reader-writer 81 in the die cutting device 7, the radio frequency code that is read the largest number of times from the read radio frequency data as a finally identified radio frequency code.

In the die cutting device 7, one cold pressed material roll is disposed on the second unwinding spindle 71, and die cut material rolls are disposed on the third rewinding spindle 72. In the die cutting process, one cold pressed material roll is cut into at least two die cut material rolls, so a plurality of die cut material rolls may be disposed on the third rewinding spindle 72.

Compared with other production devices, the die cutting device 7 is characterized in that the die cutting device 7 contains a large number of metal components, and radio frequency signals are reflected on the metal surface, resulting in chaotic propagation direction of the radio frequency signal in the die cutting device 7, thereby making the radio frequency reader-writer 81 prone to reading errors. Based on this, in embodiments of the present application, at least one radio frequency reader-writer 81 is disposed at each of the second unwinding spindle 71 and the third rewinding spindle 72, and these radio frequency reader-writers 81 are configured to periodically read during the entire execution of the die cutting process, so as to obtain a plurality of reading results. The radio frequency code with the strongest radio frequency signal is selected from the plurality of reading results, which can effectively improve the accuracy of radio frequency identification in the die cutting process.

In some embodiments of the present application, a plurality of electronic tags 82 are mounted on an inner wall of the drum, data stored in each electronic tag 82 includes the radio frequency code of the material roll and an identifier of the electronic tag 82, and a string of a first preset number of digits is the radio frequency code of the material roll; and a portion of the plurality of electronic tags 82 is mounted at one end of the inner wall of the drum, and another portion of the plurality of electronic tags 82 is mounted at the other end of the inner wall of the drum.

One or a plurality of electronic tags 82 may be provided in the drums of the above coated material roll, cold pressed material roll, and die cut material roll. Under the condition that a plurality of electronic tags 82 are provided, the above method may be used to arrange the plurality of electronic tags 82 on the inner wall of the drum of the material roll.

The plurality of electronic tags may be evenly arranged on the inner wall of the drum. Installing a plurality of electronic tags 82 on the inner wall of the drum can increase the probability that the electronic tags 82 of the material roll are located in the radio frequency range of the radio frequency reader-writer 81, thereby improving the probability that the radio frequency reader-writer 81 successfully reads the electronic tags 82 of the material roll. Especially for coated material rolls with a relatively large width, arranging a plurality of electronic tags 82 can reduce the occurrence of radio frequency identification failures.

Since the electronic tag 82 is mounted on the inner wall of the drum of the material roll, as the drum rotates, an angular relationship between the electronic tag 82 and the radio frequency reader-writer 81 cannot remain unchanged, which may affect the reading effect. Based on this, in some embodiments, the electronic tag 82 may be an omnidirectional electronic tag 82. The omnidirectional electronic tag 82 can support reading by radio frequency reader-writers 81 in all directions, has strong anti-interference ability, and can effectively improve the reading accuracy of the radio frequency code of the material roll.

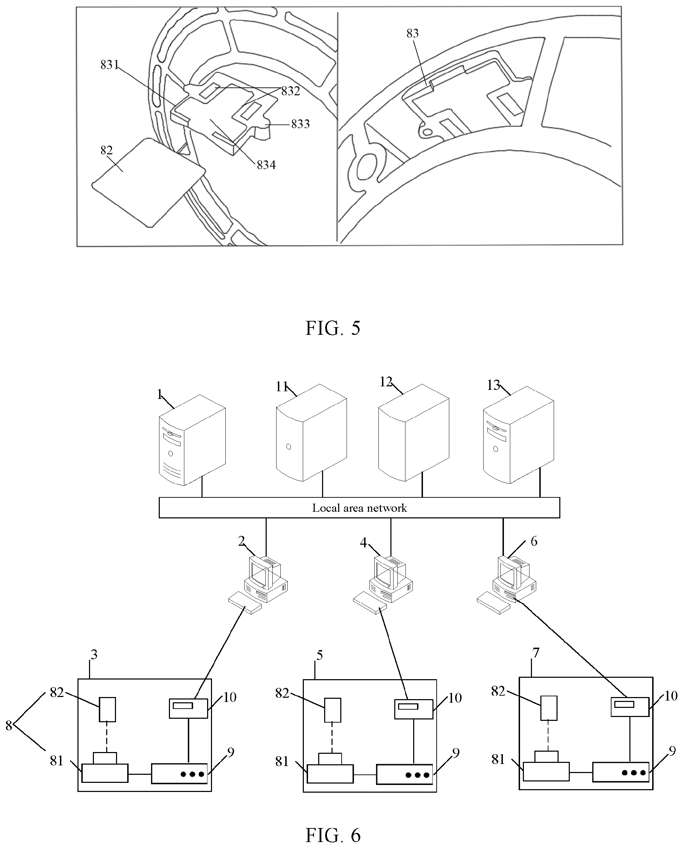

In some embodiments of the present application, as shown in FIG. 5, the radio frequency identification system 8 further includes a mounting member 83, the mounting member 83 including a body 831, an elastic piece 832 formed on the body 831, and a fixing member 833; one surface of the body 831 is an arc surface, and a card slot 834 is provided on the other surface, the electronic tag 82 is inserted into the card slot 834, and the elastic piece 832 is in contact with and presses the electronic tag 82; and the fixing member 833 is configured to fix the mounting member 83 on the inner wall of the drum, and the arc surface is in contact with the inner wall of the drum.

A hole may be provided in the above fixing member 833, and the mounting member 83 is fixed on the inner wall of the drum by a bolt passing through the hole and cooperating a nut with the bolt. The mounting member 83 may also be fixed on the inner wall of the drum by screws. Alternatively, the mounting member 83 may also be fixed to the inner wall of the drum by adhesive.

The curvature of the above arc surface may be determined based on the curvature of the inner wall of the drum. The curvature of the arc surface is adapted to the curvature of the inner wall of the drum, so that when the mounting member 83 is fixed to the inner wall of the drum, the arc surface can be attached to the inner wall of the drum.

The electronic tag 82 can be securely mounted on the drum of the material roll through the mounting member 83 described above, making the electronic tag 82 not prone to loosening or falling off, and facilitating disassembly or replacement of the electronic tag 82.

In some embodiments of the present application, as shown in FIG. 6, the coating device 3, the cold pressing device 5, and the die cutting device 7 each include a switch 9 and a programmable controller 10; the electrode sheet production system further includes a workshop logistics and radio frequency middleware system 11, an automated guided vehicle system 12, and a warehouse management system 13;
in the coating device 3, the cold pressing device 5, and the die cutting device 7, the radio frequency reader-writer 81 in each device is connected to the programmable controller 10 through the switch 9;
the programmable controller 10 of the coating device 3 is connected to the coating superordinate computer 2, the programmable logic controller 10 of the cold pressing device 5 is connected to the cold pressing superordinate computer 4, and the programmable logic controller 10 of the die cutting device 7 is connected to the die cutting superordinate computer 6; and
the manufacturing execution system 1, the workshop logistics and radio frequency middleware system 11, the automated guided vehicle system 12, and the warehouse management system 13 are each connected to the coating superordinate computer 2, the cold pressing superordinate computer 4, and the die cutting superordinate computer 6 through a local area network.

The above workshop logistics and radio frequency middleware system 11 is configured to cooperate with each superordinate computer, manage the automatic handling of various materials in each process in the factory workshop, and implement resource sharing such as computing resources and network communication on the service side for radio frequency identification software in different superordinate computers. The automated guided vehicle system 12 communicates with each superordinate computer to implement control and management of automated guided vehicles in the factory workshop. The warehouse management system 13 communicates with each superordinate computer to implement storage management of various materials in the factory workshop.

The number of radio frequency reader-writers 81 in the coating device 3, the cold pressing device 5, and the die cutting device 7 may each be one or more, and the radio frequency reader-writers 81 in each device are respectively connected to the switch 9 in the respective devices. The radio frequency reader-writer 81, the switch 9, and the programmable controller 10 in the same device may be communicatively connected via the internal local area network of the device, or may be communicatively connected via a wireless manner such as Wi-Fi or Bluetooth. The programmable controller 10 may include a PLC (Programmable Logic Controller, programmable logic controller).

In some embodiments of the present application, in the electrode sheet production system, the number of the coating devices 3, the cold pressing devices 5, and the die cutting devices 7 may each be one or more, and each device has its respective corresponding superordinate computer. Such equipment deployment manner may be referred to as distributed deployment. The superordinate computer of each device may adopt dual network cards. The superordinate computer, the radio frequency reader-writer 81, and programmable controller 10 in the corresponding device form a first local area network via the switch 9, and the superordinate computer communicates with the manufacturing execution system 1, the logistics and radio frequency middleware system 11, the automated guided vehicle system 12, and the warehouse management system 13 via a second local area network. Adopting distributed deployment can reduce system coupling. When a single device fails, normal operation of other devices can be ensured, and pressure on the manufacturing execution system 1 can also be reduced. The radio frequency reader-writer 81 communicates with the programmable controller 10 in the device via the switch 9, thereby achieving uploading of the automatically identified radio frequency code of the material roll to the superordinate computer via the programmable controller 10, further uploading to the manufacturing execution system 1 via the superordinate computer, and thus improving the operation efficiency of the entire electrode sheet production system.

Communication between the superordinate computer and the manufacturing execution system 1, the workshop logistics and radio frequency middleware system 11, the automated guided vehicle system 12, and the warehouse management system 13 is implemented in the second local area network, which helps implement automatic flow of information in processes such as coating, cold pressing, and die cutting in electrode sheet production, thereby improving the degree of automation in electrode sheet production.

In some embodiments of the present application, the die cut material rolls produced in the die cutting process may be transported to the warehouse by an automatic transfer vehicle and stored at a predetermined position in the warehouse. The warehouse management system 13 identifies the storage position information of the die cut material roll, or receives manually uploaded storage position information, and stores the storage position information in the roll information corresponding to the die cutting roll number of the die cut material roll. In the winding loading process of cell production, a winding device automatically calls for materials from the warehouse, the automatic transfer vehicle transports the die cut material roll to the winding device, and an operator mounts the die cut material roll on the unwinding spindle of the winding device. A radio frequency reader-writer 81 may also be mounted at the unwinding spindle to automatically read the electronic tag 82 of the unwound die cut material roll, and upload the read data to the winding superordinate computer via the programmable controller in the winding device. The winding superordinate computer extracts the radio frequency code of the unwound die cut material roll from the uploaded radio frequency data. The specific extraction manner may be the same as the extraction manner in any process such as the foregoing coating process, cold pressing process, or die cutting process. Details are not described herein again.

After the winding superordinate computer obtains the radio frequency code of the unwound die cut material roll, it obtains the corresponding die cutting roll number based on the radio frequency code, and deletes the information of the die cut material roll corresponding to the radio frequency code from the roll information corresponding to the die cutting roll number, so as to complete the material consumption processing of the die cut material roll.

A radio frequency reader-writer 81 is also disposed in the winding device, implementing automatic and accurate material consumption of the die cut material roll used in the cell production process, improving the accuracy of die cutting related data, and helping improve the accuracy of subsequent data tracing.

In embodiments of the present application, the radio frequency code of the material roll is automatically identified via the radio frequency identification system, and the radio frequency code of the material roll is automatically uploaded to the manufacturing execution system. The manufacturing execution system establishes a mapping relationship between the radio frequency code of the material roll and a roll number, so that the radio frequency code on the physical material roll accurately corresponds to the roll number recorded in the manufacturing execution system, effectively improving the consistency between the physical object and the system record, and helping improve the accuracy of subsequent data tracing. The entire electrode sheet production process requires no manual affixing of barcodes to the material rolls, reducing the manual intervention in the electrode sheet production process and improving the degree of automation in electrode sheet production.

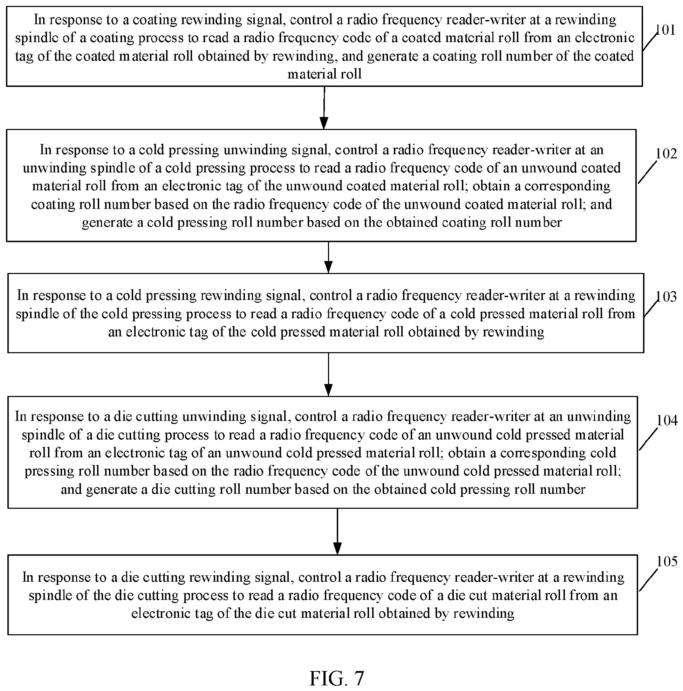

Some embodiments of the present application further provide a control method for an electrode sheet production system. The method is applied to the electrode sheet production system according to any one of the above embodiments. The description of the embodiments of the control method tends to emphasize the differences from the various embodiments of the foregoing electrode sheet production system, and the similarities or identical parts may be cross-referenced, details are not described herein again for brevity. Referring to FIG. 7, the method specifically includes the following steps.

Step 101: In response to a coating rewinding signal, control a radio frequency reader-writer at a rewinding spindle of a coating process to read a radio frequency code of a coated material roll from an electronic tag of the coated material roll obtained by rewinding, and generate a coating roll number of the coated material roll.

Step 102: In response to a cold pressing unwinding signal, control a radio frequency reader-writer at an unwinding spindle of a cold pressing process to read a radio frequency code of an unwound coated material roll from an electronic tag of the unwound coated material roll; obtain a corresponding coating roll number based on the radio frequency code of the unwound coated material roll; and generate a cold pressing roll number based on the obtained coating roll number.

Step 103: In response to a cold pressing rewinding signal, control a radio frequency reader-writer at a rewinding spindle of the cold pressing process to read a radio frequency code of a cold pressed material roll from an electronic tag of the cold pressed material roll obtained by rewinding.

Step 104: In response to a die cutting unwinding signal, control a radio frequency reader-writer at an unwinding spindle of a die cutting process to read a radio frequency code of an unwound cold pressed material roll from an electronic tag of an unwound cold pressed material roll; obtain a corresponding cold pressing roll number based on the radio frequency code of the unwound cold pressed material roll; and generate a die cutting roll number based on the obtained cold pressing roll number.

Step 105: In response to a die cutting rewinding signal, control a radio frequency reader-writer at a rewinding spindle of the die cutting process to read a radio frequency code of a die cut material roll from an electronic tag of the die cut material roll obtained by rewinding.

The execution subject of embodiments of the present application may include but is not limited to the manufacturing execution system and superordinate computers such as the coating superordinate computer, cold pressing superordinate computer, and die cutting superordinate computer.

The coating process uses the coating device to uniformly coat slurry on the current collector and dry it to form positive and negative electrode sheets. The coating device outputs a coated material roll, which is obtained by winding the positive electrode sheet or negative electrode sheet on a drum. The coating rewinding signal may be generated by a component in the coating device used to trigger the signal. For example, the coating device includes an inflation button, and the rewinding signal is triggered and generated when the inflation button is detected to be pressed.

In actual application scenarios, the programmable controller in the coating device detects the triggered coating rewinding signal and sends the coating rewinding signal to the coating superordinate computer. After receiving the signal, the coating superordinate computer sends a reading instruction to the radio frequency reader-writer disposed at the first rewinding spindle in the coating device.

Specifically, the coating superordinate computer first sends a reading instruction to the programmable controller in the coating device, the programmable controller sends the reading instruction to a switch, and the switch forwards the reading instruction to the radio frequency reader-writer disposed at the first rewinding spindle. After receiving the reading instruction, the radio frequency reader-writer reads an electronic tag of the coated material roll mounted on the first rewinding spindle, and sends the read radio frequency data to the coating superordinate computer sequentially via the switch and the programmable controller. The coating superordinate computer extracts the radio frequency code of the coated material roll from the read radio frequency data, and then sends the radio frequency code to the manufacturing execution system. The manufacturing execution system generates a coating roll number of the coated material roll. The coating roll number is used to identify the roll information corresponding to the coated material roll. The roll information records information such as a production amount, a production time, current collector material information, slurry material information, and a coating thickness of the coated material roll.

The cold pressing process further compacts the coated electrode sheet via the cold pressing device and continuously longitudinally slits a wider full-roll electrode sheet into several narrow sheets of required widths, that is, cuts the wider coated material roll into a plurality of cold pressed material rolls with relatively smaller widths. The cold pressing unwinding signal and cold pressing rewinding signal may be generated by components in the cold pressing device for triggering the unwinding and rewinding signals. For example, the cold pressing device also includes an inflation button, and the unwinding signal in the cold pressing process is triggered and generated when the inflation button is detected to be pressed.

The coated material roll is mounted at the first unwinding spindle in the cold pressing device, and the cold pressing unwinding signal is triggered by the operator. The programmable controller of the cold pressing device detects the cold pressing unwinding signal and sends the cold pressing unwinding signal to the cold pressing superordinate computer. After receiving the signal, the cold pressing superordinate computer sends a reading instruction to the radio frequency reader-writer disposed at the first unwinding spindle. After receiving the reading instruction, the radio frequency reader-writer reads an electronic tag of the coated material roll mounted on the first unwinding spindle, and sends the read radio frequency data to the cold pressing superordinate computer sequentially via the switch and the programmable controller in the cold pressing device. The cold pressing superordinate computer extracts the radio frequency code of the unwound coated material roll from the read radio frequency data, and then sends the radio frequency code to the manufacturing execution system. The manufacturing execution system obtains a corresponding coating roll number based on the radio frequency code, and generates a cold pressing roll number based on the coating roll number. The generated cold pressing roll number may include the coating roll number, or part of the characters in the generated cold pressing roll number may be the same as part of the characters in the coating roll number. The cold pressing roll number is used to identify the roll information corresponding to the cold pressed material roll produced in the cold pressing process. The roll information of the cold pressed material roll records information such as the production amount, production time, compaction density of the electrode sheet, and size information of the electrode sheet of the cold pressed material roll.

In the cold pressing process, a drum for winding the electrode sheet to produce the cold pressed material roll is also mounted at the second rewinding spindle of the cold pressing device, and a cold pressing rewinding signal is triggered by the operator. The programmable controller of the cold pressing device detects the cold pressing rewinding signal and sends the cold pressing rewinding signal to the cold pressing superordinate computer corresponding to the cold pressing device. After receiving the signal, the cold pressing superordinate computer sends a reading instruction to the radio frequency reader-writer disposed at the second rewinding spindle. After receiving the reading instruction, the radio frequency reader-writer reads an electronic tag of the drum mounted on the second rewinding spindle, and sends the read radio frequency data to the cold pressing superordinate computer sequentially via the switch and the programmable controller in the cold pressing device. The cold pressing superordinate computer extracts the radio frequency code of the cold pressed material roll obtained by rewinding from the read radio frequency data, and then sends the radio frequency code to the manufacturing execution system.

The die cutting process uses the die cutting device to punch and mold the electrode sheet of the cold pressed material roll obtained in the cold pressing process to obtain a plurality of die cut material rolls for subsequent processes. The die cutting unwinding signal and die cutting rewinding signal may be generated by components in the die cutting device used to trigger the unwinding and rewinding signals. For example, the die cutting device may also include an inflation button or knob, and the rewinding signal in the die cutting process is triggered and generated when the inflation button is detected to be pressed or the knob is detected to be rotated.

The cold pressed material roll is mounted at the second unwinding spindle in the die cutting device, and a die cutting unwinding signal is triggered by the operator. The programmable controller of the die cutting device detects the die cutting unwinding signal and sends the die cutting unwinding signal to the die cutting superordinate computer. After receiving the signal, the die cutting superordinate computer sends a reading instruction to the radio frequency reader-writer disposed at the second unwinding spindle. After receiving the reading instruction, the radio frequency reader-writer reads an electronic tag of the cold pressed material roll mounted on the second unwinding spindle, and sends the read radio frequency data to the die cutting superordinate computer sequentially via the switch and the programmable controller in the die cutting device. The die cutting superordinate computer extracts the radio frequency code of the unwound cold pressed material roll from the read radio frequency data, and then sends the radio frequency code to the manufacturing execution system. The manufacturing execution system obtains a corresponding cold pressing roll number based on the radio frequency code, generates a die cutting roll number based on the cold pressing roll number. The generated die cutting roll number may include the cold pressing roll number, or part of the characters in the generated die cutting roll number may be the same as part of the characters in the cold pressing roll number. The die cutting roll number is used to identify the roll information corresponding to the die cut material roll produced in the die cutting process. The roll information of the die cut material roll records information such as a production amount, a production time, and size information of the electrode sheet of the die cut material roll.

In the die cutting process, a drum for winding the electrode sheet to produce the die cut material roll is also mounted at the third rewinding spindle of the die cutting device, and a die cutting rewinding signal is triggered by the operator. The programmable controller of the die cutting device detects the die cutting rewinding signal and sends the die cutting rewinding signal to the die cutting superordinate computer corresponding to the die cutting device. After receiving the signal, the die cutting superordinate computer sends a reading instruction to the radio frequency reader-writer disposed at the third rewinding spindle. After receiving the reading instruction, the radio frequency reader-writer reads an electronic tag of the drum mounted on the third rewinding spindle, and sends the read radio frequency data to the die cutting superordinate computer sequentially via the switch and the programmable controller in the die cutting device. The die cutting superordinate computer extracts the radio frequency code of the die cut material roll obtained by rewinding from the read radio frequency data, and then sends the radio frequency code to the manufacturing execution system.

In the rewinding of the coating process, the unwinding and rewinding of the cold pressing process, and the unwinding and rewinding of the die cutting process, the radio frequency code of the material roll is automatically identified via the radio frequency reader-writer, and the roll number of each process is generated, so that the radio frequency code on the physical material roll accurately corresponds to the roll number recorded in the system, which effectively improves the consistency between the physical object and the system record, and helps improve the accuracy of subsequent data tracing. The entire electrode sheet production process requires no manual affixing of barcodes to the material rolls, reducing the manual intervention in the electrode sheet production process and improving the degree of automation in electrode sheet production.

In some embodiments of the present application, in the coating process, a mapping relationship between the coating roll number of the coated material roll obtained by rewinding and the radio frequency code is stored; in the cold pressing process, a mapping relationship between the radio frequency code of the unwound coated material roll, the cold pressing roll number, and the radio frequency code of the cold pressed material roll obtained by rewinding is stored; and in the die cutting process, a mapping relationship between the radio frequency code of the unwound cold pressed material roll, the die cutting roll number, and the radio frequency code of the die cut material roll obtained by rewinding is stored.

In the coating process, the cold pressing process, and the die cutting process, after automatically reading the radio frequency code of the material roll by the radio frequency reader-writer, the mapping relationship between the radio frequency code of the material roll in each process and the corresponding roll number is also stored, facilitating quick tracing to the required data in a subsequent data tracing process based on these mapping relationships. Moreover, in the mapping relationship stored in the cold pressing process, the radio frequency code of the coated material roll, the cold pressing roll number, and the radio frequency code of the produced cold pressed material roll are associated with each other, so that based on the mapping relationship, information about the cold pressed material rolls cut from the coated material roll can be inquired by using the radio frequency code of the coated material roll, and by using the radio frequency code and/or cold pressing roll number of the cold pressed material roll, it can also be inquired which coated material roll the cold pressed material roll was cut from. Similarly, in the die cutting process, the radio frequency code of the cold pressed material roll, the die cutting roll number, and the radio frequency code of the die cut material roll obtained by rewinding are associated with each other, so that information about the die cut material rolls cut from the cold pressed material roll can be inquired by using the radio frequency code of the cold pressed material roll, and by using the radio frequency code and/or die cutting roll number of the die cut material roll, it can also be inquired which cold pressed material roll the die cut material roll was die-cut from. The material flow relationship between the coating process, the cold pressing process, and the die cutting process and the material information can be traced, expanding the scope of data tracing in the electrode sheet production process, and improving the tracing efficiency and accuracy.

In the coating process, a plurality of electronic tags are mounted on the coated material roll; the number of electronic tags with the same first preset number of digits is counted based on the data of the plurality of read electronic tags; and a character sequence of the first preset number of digits is extracted from the data of the electronic tag with the largest counted number as the radio frequency code of the coated material roll.

Since the coated material roll is large, the distance between the radio frequency reader-writer and the electronic tag on the coated material roll is relatively long, and the distance between adjacent coated material rolls in the coating process is short, cross-reading is prone to occur. To improve the reading accuracy, a plurality of electronic tags are mounted on the inner wall of the drum of the coated material roll, and the plurality of electronic tags may be evenly distributed on the inner wall of the drum. Alternatively, half of the plurality of electronic tags are distributed at one end of the drum, and the other half are distributed at the other end of the drum. For example, assuming there are six electronic tags in total, three electronic tags may be distributed at the left end of the inner wall of the drum of the coated material roll, and the other three at the right end of the inner wall of the drum, with the 3 electronic tags at each end spaced at 120°.

Data stored in the plurality of electronic tags mounted on the same coated material roll has the same first preset number of digits for representing the radio frequency code of the coated material roll, and different subsequent number of digits for identifying specific electronic tags. The first preset number of digits may be the first 12 digits or the first 14 digits or the like, and the subsequent number of digits may be the last two digits, the last three digits or the like. For example, six electronic tags are mounted on the coated material roll, the first 12 digits of each electronic tag are the same as A123B456C789, and the last two digits of each electronic tag are different, sequentially 01, 02, 03, 04, 05, 06.

Because a plurality of electronic tags are mounted on the coated material roll, and the distance between adjacent coated material rolls in the coating process is short, the radio frequency reader-writer at the first rewinding spindle is likely to read data of a plurality of electronic tags. In this case, the number of electronic tags with the same first preset number of digits is counted from the plurality of read radio frequency codes, and the character sequence of the first preset number of digits in the data of the electronic tag with the largest number is determined as the radio frequency code of the coated material roll.

In the coating process, a plurality of electronic tags are provided on the coated material roll. In the case where the radio frequency reader-writer reads a plurality of radio frequency codes, the radio frequency code that is read the largest number of times is taken as the radio frequency code of the coated material roll, which can effectively improve the accuracy of identifying the radio frequency code of the coated material roll in the coating process.

The coated material roll is mounted on the first unwinding spindle of the cold pressing process, so the disposition manner of the radio frequency reader-writer at the first unwinding spindle and the method of determining the radio frequency code of the coated material roll on the first unwinding spindle based on the data read by the radio frequency reader-writer can be the same as the corresponding methods in the above coating process, which will not be repeated here.

In some embodiments of the present application, a first radio frequency reader-writer and a second radio frequency reader-writer are respectively provided on two sides of the second rewinding spindle of the cold pressing process, and a power of the first radio frequency reader-writer is greater than a power of the second radio frequency reader-writer; the radio frequency code with the strongest radio frequency signal strength is selected from the radio frequency codes read by the second radio frequency reader-writer, as the radio frequency code of a first cold pressed material roll on the rewinding spindle of the cold pressing process close to the second radio frequency reader-writer; the radio frequency code of the first cold pressed material roll is excluded from the radio frequency codes read by the first radio frequency reader-writer, and the radio frequency code with the strongest radio frequency signal strength is obtained from the remaining radio frequency codes, as the radio frequency code of a second cold pressed material roll on the rewinding spindle of the cold pressing process close to the first radio frequency reader-writer.

Since a plurality of cold pressed material rolls is cut in the cold pressing process, a plurality of cold pressed material rolls may be sleeved on one second rewinding spindle, for example, two cold pressed material rolls are mounted on one second rewinding spindle. Therefore, the radio frequency reader-writer at the second rewinding spindle may need to read electronic tags of a plurality of cold pressed material rolls. A first radio frequency reader-writer and a second radio frequency reader-writer are respectively provided on two sides of the second rewinding spindle. The second radio frequency reader-writer is closer to the cold pressed material roll and has a relatively small power, so the second radio frequency reader-writer has a smaller radio frequency range, which helps read the electronic tag of the cold pressed material roll closer to the second radio frequency reader-writer and reduces interference from the electronic tag of the cold pressed material roll farther away. The first radio frequency reader-writer has a larger radio frequency range, which may read the electronic tags of all cold pressed material rolls on the second rewinding spindle. The radio frequency code of the first cold pressed material roll identified by the second radio frequency reader-writer is excluded from the radio frequency codes read by the first radio frequency reader-writer, and the radio frequency code with the strongest radio frequency signal is then selected from the remaining radio frequency codes as the radio frequency code of the second cold pressed material roll. In this way, the radio frequency code of each cold pressed material roll on the second rewinding spindle can be accurately read.

In some embodiments of the present application, the radio frequency reader-writer at the rewinding spindle of the die cutting process is controlled to perform a plurality of reading operations on the electronic tag of the die cut material roll obtained by rewinding, and the radio frequency code that is read the largest number of times is determined as the radio frequency code of the die cut material roll. The radio frequency reader-writer at the unwinding spindle of the die cutting process can also perform a plurality of reading operations and select the radio frequency code that is read the largest number of times as the radio frequency code of the unwound cold pressed material roll.

The die cutting process performs die cutting on the cold pressed material roll produced in the cold pressing process, so the unwinding in the die cutting process is the cold pressed material roll, and after die cutting processing, the die cut material roll is finally obtained by rewinding. One cold pressed material roll is cut into at least two die cut material rolls. The die cutting device contains many metal components, and the radio frequency signal will be reflected on the metal surface, resulting in chaotic propagation direction of the radio frequency signal in the die cutting device, thereby making the radio frequency reader-writer prone to reading errors. In embodiments of the present application, the radio frequency reader-writer performs a plurality of reading operations during the entire execution of the die cutting process, and selects the radio frequency code with the strongest radio frequency signal from the plurality of reading results.

Automatic identification of the radio frequency code of the cold pressed material roll used in the die cutting process and the radio frequency code of the produced die cut material roll is implemented, and a plurality of readings are performed and the radio frequency code with the strongest radio frequency signal is selected, thereby improving the reading accuracy of the die cutting process.

In some embodiments of the present application, in the coating process, in response to a rewinding end signal triggered by a cutter, a first-side coating production amount of a target coated material roll currently obtained by rewinding is obtained; the first-side coating production amount is recorded in roll information corresponding to the coating roll number of the target coated material roll; upon receiving a first-side data collection end instruction, determining that first-side coating of the target coated material roll is completed; controlling the coating device to perform a coating operation on a second side of the target coated material roll, the second side being the other side opposite to the first side; and upon detecting a second-side data collection end instruction triggered by a control panel, determining that coating of the target coated material roll is completed.

In the coating process, slurry is usually coated on two sides of the current collector respectively. When the slurry coating on the first side is completed, the current collector is cut off by the cutter. The coating device detects the cutter action and determines that a rewinding end signal triggered by the cutter is detected. At this time, the programmable controller of the coating device obtains the meter count of the target coated material roll from the meter counter in the coating device, sends the meter count to the coating superordinate computer, and the coating superordinate computer calculates the product of the meter count and the width of the current collector to obtain the first-side coating production amount of the target coated material roll. The coating superordinate computer calls the logout interface of the manufacturing execution system, queries the coating roll number of the target coated material roll based on the foregoing radio frequency code read by radio frequency identification, and sets the status of the coating roll number to queued. Then, the coating superordinate computer calls the adjustment first side quantity interface of the manufacturing execution system to upload the first-side coating production amount of the target coated material roll to the manufacturing execution system.

After uploading the first-side coating production amount to the manufacturing execution system, the coating superordinate computer calls the first side automatic start interface of the manufacturing execution system to change the status of the coating roll number of the target coated material roll to active. After the first side automatic start interface is successfully called, the operator performs first-side data collection and material consumption operations via the control panel of the manufacturing execution system. Specifically, the operator clicks the button corresponding to data collection and material consumption on the control panel. After the manufacturing execution system detects the data collection and material consumption instruction triggered by the operator, the manufacturing execution system records the above first-side coating production amount in the roll information corresponding to the coating roll number of the target coated material roll, and subtracts the amount used by the target coated material roll from the quantity of the current collector used to produce the target coated material roll. After completing the data collection and material consumption, the control panel displays a completion prompt. The operator clicks the data collection and material consumption button on the system home page of the coating superordinate computer. The radio frequency identification system detects that the button is clicked, that is, receives the first-side data collection end instruction, and determines that the first-side coating of the target coated material roll is completed. After the first side is completed, the coating superordinate computer automatically calls the second side start interface of the manufacturing execution system to control the coating device to perform the coating operation on the second side of the target coated material roll.

After the second side start operation, the operator performs second-side data collection and material consumption operations via the control panel of the manufacturing execution system. After the operation is completed, the operator clicks the data collection and material consumption button on the system home page of the coating superordinate computer. The coating superordinate computer detects that the button is clicked, that is, receives the second-side data collection end instruction, determines that the second side is completed, and further determines that the coating of the target coated material roll is completed.

Through the above method in the coating process, the production amount of the coated material roll is automatically recorded and stored in the roll information corresponding to the coating roll number. After completion of the first-side coating, the coating operation on the second side is automatically controlled, and the entire process is automated, reducing the manual intervention and improving the automation and coating efficiency of the coating process.

In some embodiments of the present application, in the cold pressing process, upon detecting a rewinding end signal of the last splitting rewinding corresponding to the currently unwound coated material roll, a current account quantity corresponding to the currently unwound coated material roll is obtained; a ratio of the current account quantity to the number of rolls of each target cold pressed material roll is calculated, the ratio is used as an account production amount of each target cold pressed material roll, and the account production amount of each target cold pressed material roll is stored in roll information corresponding to the cold pressing roll number of each target cold pressed material roll.

The coated material roll is large and will be cut into a plurality of relatively smaller cold pressed material rolls in the cold pressing process. One coated material roll may need to undergo one or more cold pressing processes to be split into a plurality of cold pressed material rolls. When the coated material roll needs to undergo a plurality of cold pressing processes, in each cold pressing process before the last cold pressing process, the actual production amount of the cold pressed material roll obtained by cutting is determined based on the meter count of the cold pressed material roll measured by the meter counter, and the actual production amount is recorded in the roll information corresponding to the cold pressing roll number.

In the case where the coated material roll undergoes only one cold pressing process, or in the last cold pressing process among a plurality of cold pressing processes, after the rewinding of the cold pressing device is completed, the operator clicks the unloading confirmation button on the human-machine interface of the cold pressing device. The programmable controller of the cold pressing device detects that the button is clicked, determines that the rewinding end signal of the last splitting rewinding is received, transmits the rewinding end signal to the cold pressing superordinate computer. After receiving the signal, the cold pressing superordinate computer calls the acquisition account quantity interface of the manufacturing execution system to obtain the current account quantity of the unwound coated material roll. The current account quantity is the remaining account quantity after the coated material roll is consumed in the previous several cold pressing processes.

In the last cold pressing process of the cold pressing process, the cold pressed material roll is always split according to the current account quantity of the coated material roll. For example, the current account quantity of the coated material roll in the last cold pressing process is 600 EA, and it is split into 3 cold pressed material rolls in total, then the account production amount of these three cold pressed material rolls is 200 EA each.

In the cold pressing process, based on the current account quantity of the unwound coated material roll, the splitting calculation of the production amounts of respective cold pressed material rolls obtained by the last splitting rewinding is automatically performed, improving the accuracy of the production amount recording of the cold pressed material roll.

In some embodiments of the present application, in response to the rewinding end signal of the last splitting rewinding, a current physical quantity corresponding to the currently unwound coated material roll is obtained; under the condition that the current account quantity is less than the current physical quantity, in response to entering the die cutting process, an actual production amount of each target cold pressed material roll is calculated based on the current physical quantity and the number of rolls of each target cold pressed material roll; in roll information corresponding to the die cutting roll number, the account production amount of each target cold pressed material roll is respectively modified to the actual production amount of each target cold pressed material roll.

After the cold pressing superordinate computer receives the rewinding end signal of the last splitting rewinding, it also obtains the meter count of the unwound coated material roll measured by the meter counter from the programmable logic control of the cold pressing device, calculates the product of the meter count and the width of the coated material roll to obtain the current physical quantity of the unwound coated material roll. In the case where the current account quantity is less than the current physical quantity, after splitting the cold pressed material roll according to the current account quantity, upon entering the die cutting process, the actual production amount of each target cold pressed material roll is calculated based on the current physical quantity and the number of rolls of each target cold pressed material roll. In the roll information corresponding to the die cutting roll number, the account production amount of each target cold pressed material roll is respectively modified to the actual production amount of each target cold pressed material roll, so that the account production amount of the cold pressed material roll unwound in the die cutting process is consistent with the actual situation, which helps improve the degree of consistency between the accounts and the actual in material roll accounting in the die cutting process.

In some embodiments of the present application, in response to a rewinding end signal in the die cutting process, a current account quantity and a current physical quantity of the currently unwound cold pressed material roll are obtained; under the condition that the current physical quantity is less than or equal to the current account quantity, a first ratio between the current physical quantity and the number of rolls of each die cut material roll is calculated, and the first ratio is stored as an account production amount of each die cut material roll in roll information corresponding to the die cutting roll number of each die cut material roll; under the condition that the current physical quantity is greater than the current account quantity, the current account quantity of the currently unwound cold pressed material roll recorded in the system is modified to the current physical quantity, a second ratio between the modified current account quantity and the number of rolls of each die cut material roll is calculated, and the second ratio is stored as an account production amount of each die cut material roll in roll information corresponding to the die cutting roll number of each die cut material roll.

After the programmable controller in the die cutting device detects the rewinding end signal, the signal is transmitted to the die cutting superordinate computer. The die cutting superordinate computer calls the interface of the manufacturing execution system to obtain the current account quantity of the unwound cold pressed material roll. In addition, the die cutting superordinate computer obtains the meter count of the unwound cold pressed material roll measured by the meter counter from the programmable controller of the die cutting device, calculates the product of the meter count and the width of the cold pressed material roll to obtain the current physical quantity of the unwound cold pressed material roll. In the case where the current physical quantity is less than a first threshold or greater than a second threshold, it indicates an abnormality, and no splitting operation is performed, and subsequent manual inspection and processing of the die cut material roll obtained by rewinding is required. The first threshold may be 4 EA, 5 EA, or the like, and the second threshold may be 350 EA, 380 EA, or the like.

In the case where the current physical quantity is greater than or equal to the first threshold and less than or equal to the second threshold, the size relationship between the current physical quantity and the current account quantity of the unwound cold pressed material roll is compared. In the case where the current physical quantity is less than or equal to the current account quantity, the die cutting superordinate computer calls the splitting completion interface of the manufacturing execution system to split the current physical quantity of the unwound cold pressed material roll into the account production amount of each die cut material roll, that is, calculates the first ratio between the current physical quantity and the number of rolls of each die cut material roll, and stores the first ratio as the account production amount of each die cut material roll in the roll information corresponding to the die cutting roll number of each die cut material roll. In the case where there is still remaining in the current account quantity of the unwound cold pressed material roll after splitting, no processing is performed on the remaining account quantity, and subsequent unified destruction processing will be performed on the remaining account quantity.

In the case where the current physical quantity is greater than the current account quantity, the die cutting superordinate computer calls the adjustment quantity interface of the manufacturing execution system to adjust the current account quantity of the cold pressed material roll recorded in the manufacturing execution system to the current physical quantity, and then splits the current physical quantity into the account production amount of each die cut material roll through the above method and stores the physical quantity in the roll information corresponding to the die cutting roll number.

In the die cutting process, the account production amount of the die cut material roll is calculated based on the current physical quantity, making the account production amount of the die cut material roll closer to the real actual production amount, improving the accuracy of the account production amount of the die cut material roll recorded in the die cutting process.

In some embodiments of the present application, the die cut material rolls produced in the die cutting process may be transported to the warehouse by an automatic transfer vehicle and stored at a predetermined position in the warehouse. The warehouse management system identifies the storage position information of the die cut material roll, or receives manually uploaded storage position information, and stores the storage position information in the roll information corresponding to the die cutting roll number of the die cut material roll. In the winding loading process of cell production, the winding device automatically requests materials from the warehouse, the automatic transfer vehicle transports the die cut material roll to the winding device, the operator installs the die cut material roll on the unwinding spindle of the winding device, and a radio frequency reader-writer can also be mounted at the unwinding spindle to automatically read the electronic tag of the unwound die cut material roll, and upload the read data to the winding superordinate computer corresponding to the winding device via the programmable controller in the winding device. The winding superordinate computer extracts the radio frequency code of the unwound die cut material roll from the uploaded radio frequency data. The specific extraction method can be the same as the extraction method in any process such as the foregoing coating process, cold pressing process, or die cutting process, which will not be repeated here.

After the winding superordinate computer obtains the radio frequency code of the unwound die cut material roll, it obtains the corresponding die cutting roll number based on the radio frequency code, and deletes the information of the die cut material roll corresponding to the radio frequency code from the roll information corresponding to the die cutting roll number, so as to complete the material consumption processing of the die cut material roll.

A radio frequency reader-writer is also disposed in the winding device, implementing automatic and accurate material consumption of the die cut material roll used in the cell production process, improving the accuracy of die cutting related data, and helping improve the accuracy of subsequent data tracing.

In embodiments of the present application, in one or more processes such as the coating process, cold pressing process, and die cutting process of electrode sheet production, the radio frequency code of the material roll can be automatically identified, and the mapping relationship between the radio frequency code of the material roll and the roll number is automatically stored, so that the radio frequency code on the physical material roll accurately corresponds to the roll number recorded in the system, effectively improving the consistency between the physical object and the system record, which helps improve the accuracy of subsequent data tracing. The entire electrode sheet production process requires no manual affixing of barcodes to the material rolls, reducing the manual intervention in the electrode sheet production process and improving the degree of automation in electrode sheet production.

The description of each embodiment above tends to emphasize the differences between the various embodiments, and the similarities or identical parts can be cross-referenced, which will not be repeated here for brevity.

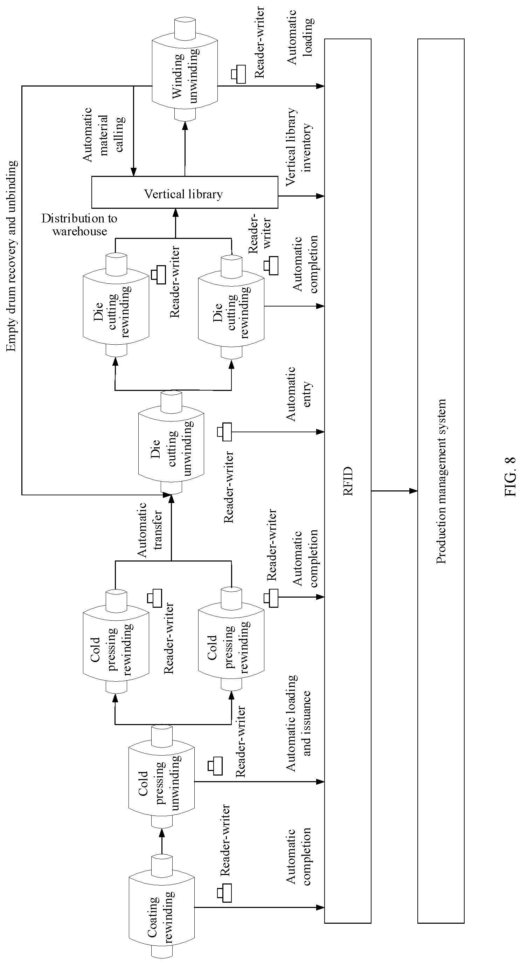

To facilitate understanding of the electrode sheet production system and control method provided by embodiments of the present application, examples are given below. In this example, radio frequency reader-writers are disposed at positions such as coating rewinding, cold pressing unwinding, cold pressing rewinding, die cutting unwinding, die cutting rewinding, and winding unwinding in the electrode sheet production process. The radio frequency code of the material roll at the corresponding position is automatically read by the provided radio frequency reader-writer, and the read radio frequency code is uploaded to the manufacturing execution system, as shown in FIG. 8. The entire process shown in FIG. 8 includes coating rewinding, cold pressing unwinding and rewinding, die cutting unwinding and rewinding, vertical library entry, and winding, so that the system can accurately trace from the winding finished product to the coating production of the coated material roll. Automatic loading

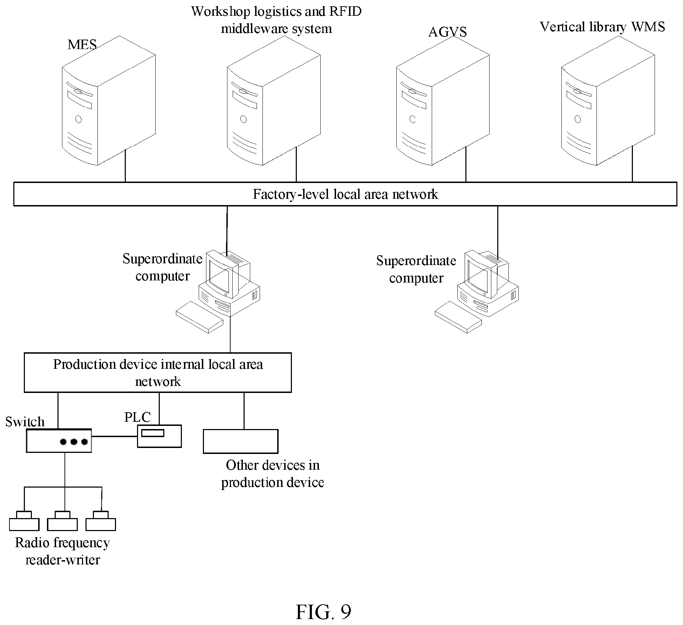

The network architecture based on the above electrode sheet production system and control method therefor is shown in FIG. 9, and the network architecture includes a factory-level local area network. The manufacturing execution system (MES as shown in FIG. 9), the workshop logistics and radio frequency middleware system, the AGVS (Automated Guided Vehicle System, automated guided vehicle system), the vertical library WMS (Warehouse Management System, warehouse management system), at least one production device, and the superordinate computers corresponding to each production device are in communication connection via the above factory-level local area network.

The above at least one production device includes the coating device, cold pressing device, die cutting device, and the like. The aggregation layer software of the radio frequency identification system is mounted in the superordinate computer corresponding to the production device, which is used to control all radio frequency reader-writers in the production device and process the data read by the radio frequency reader-writers. The production device includes a plurality of radio frequency reader-writers, switches, PLC (Programmable Logic Controller, programmable logic controller), and other devices in the production device (such as various sensors). These devices inside the production device are in communication via the internal local area network of the production device.

In some embodiments, the superordinate computer corresponding to the production device uses dual network cards, one network card is in communication connection with the PLC in the production device, and the other network card is in communication connection with the MES. Different production devices can correspond to different superordinate computers respectively. Such a distributed deployment method can reduce the coupling of the system. When an individual production device has a problem, it will not affect the normal operation of other production devices, and can also reduce the pressure on the superordinate computer and improve the stability of the system.

Based on the schematic diagram of the electrode sheet production process shown in FIG. 8 and the schematic diagram of the network architecture shown in FIG. 9, the production processes of the coating process, cold pressing process, and die cutting process are described below respectively. The RFID system mentioned in the production processes of each process refers to the radio frequency identification system software installed in the superordinate computer corresponding to the production device of each process, such as the radio frequency identification system software installed in the coating superordinate computer.

### 1. Coating process

### (1) Work order early warning setting

The operator can set the early warning quantity of the currently used work order via the RFID system. When the RFID system obtains the coating roll number, it will judge the work order corresponding to the coating roll number. If the work order quantity is less than the set early warning quantity, the RFID system will perform an alarm prompt, and the coating roll number can only be obtained after changing the work order. The early warning quantity of the work order may be the minimum area in square meters for producing coated electrode sheets.

### (2) Rewinding position loading

A drum with RFID tag is disposed at the rewinding position of the coating device. The operator presses the inflation button to trigger the "rewinding tensioning" signal, and automatically rotates slowly at 5 m/min for 15 S. The RFID system reads the RFID tag on the drum through the "tensioning signal" triggered by the PLC. After successful reading, whether the quantity of the current work order is greater than the work order quantity set is obtained by the RFID system via the MES system. If it is less than the work order quantity set by the RFID system, RFID alarm will be performed, prompting the operator to change the work order. After changing, tensioning is performed again to read the drum and recall the MES interface to obtain the roll number.

If the current work order quantity is greater than the work order quantity set by the RFID system, the RFID system obtains the coating roll number by calling the MES coating work order issuance interface, and writes the roll number and the radio frequency code identified by RFID into the PLC address respectively. The PLC program displays the roll number and radio frequency code at the corresponding position of the human-machine interface of the superordinate computer, and the RFID system writes a turret permission signal. After reading failure, the RFID system writes an alarm instruction to the PLC address. The PLC performs coating machine alarm and automatically deflates. The operator can trigger the loading operation again by pressing the inflation button.

### (3) Rewinding position start

After the equipment starts running for five meters, the equipment triggers the start rewinding signal. The RFID system unbinds the SFC (Shop Floor Control, shop floor control) information bound to the current drum according to the signal via the MES interface.

### (4) Rewinding position unloading

When the equipment production reaches the tower rotation condition, automatic unloading is prohibited, and the operator is not allowed to automatically change rolls. After the cutter completes cutting, deflation and unloading are directly performed.

### (5) Automatic completion

After the equipment production is completed, the operator performs cutter completion via the automatic roll change function. After the cutter is completed, the "rewinding end" signal is triggered (the signal is given at the instant when the cutter cuts off, and the rising edge is set only once), and the meter count of the roll produced is recorded to the PLC address at the same time. After the RFID system receives the PLC "rewinding end" signal, it performs the completion operation. After the RFID system completion process ends, it writes the unloading permission signal (clear 0 for unloading prohibition) to the PLC. The operator can normally unload and print the shipping label. The completion operation is as follows:

After the RFID system receives the "rewinding end" signal, it reads the rewinding meter count in the PLC address. The RFID system converts the meter count to EA value according to the material type. The RFID system automatically calls the MES logout interface to change the status of the roll number to queued. After successful logout, the RFID system automatically calls the MES adjustment A side quantity interface to upload the rewinding EA to the MES system. After successful A side quantity adjustment, the RFID system automatically calls the MES A side automatic start interface to change the status of the roll number to active. After the A side automatic start interface is successfully called, the operator needs to perform data collection and material consumption via the MES panel. After data collection and material consumption are completed, click the "data collection material consumption" button on the RFID system home page, and the RFID system automatically performs A side completion. After A side completion, the RFID system automatically calls the B side start interface to perform B side start operation. After B side start, the operator performs B side data collection and material consumption operations via the MES panel. After the operation is completed, click the "data collection material consumption" button on the RFID system, and the RFID system automatically performs B side completion. After B side completion, the completion process ends.

### 2. Cold pressing process

### (1) Unwinding position loading

The operator places the incoming material with RFID tag at the unwinding position, performs transfer posting operation via the MES panel, and then performs loading operation. The operator presses the inflation button to trigger the "unwinding tensioning" signal, and automatically rotates slowly at 15 m/min for 15 S. The RFID system reads the RFID tag on the drum based on the "unwinding tensioning" signal triggered by the PLC. After successful reading, the cold pressing roll number is obtained via MES interaction, and the cold pressing roll number is written to the PLC address. The PLC program displays the cold pressing roll number at the corresponding position of the human-machine interface, and the RFID system writes the loading OK signal.

After reading failure or loading operation failure, the RFID system only writes an alarm instruction to the PLC address. The PLC performs machine alarm and automatically deflates. The operator can trigger the loading operation again by pressing the inflation button. If the PLC program does not receive the OK signal written by the RFID system before the spindle rotation stops, it automatically alarms and deflates.

The RFID system judges whether the roll number at the rewinding position is consistent with the roll number obtained by loading according to the roll number obtained by loading. If not, it writes the "combined roll alarm" signal. The PLC program starts recording the meter count after startup. When the meter count exceeds the set value and continues production, the equipment triggers the combined roll alarm of the corresponding production rewinding spindle and stops the machine. This alarm can only be reset after receiving the unloading OK signal, and will not be reset and started in other cases.

### (2) Unwinding position end

When the equipment unwinding reaches the roll diameter early warning alarm, the "unwinding end" signal is triggered. The RFID system records the current production information and screens the last roll material by judging the rewinding spindle status.

### (3) Rewinding position loading

The operator places the empty drum with RFID tag at the rewinding position and performs rewinding loading operation. The operator triggers the "rewinding tensioning" signal via the inflation button/knob, and automatically rotates slowly at 5 m/min for 15 S. The RFID system reads the RFID tag on the drum through the "rewinding tensioning" signal triggered by the PLC. After successful reading, the RFID system writes the OK signal and unbinds the historical binding information of the drum via the MES interface. In case of reading failure, the RFID system writes an alarm instruction.

If the PLC program does not receive the OK signal written by the RFID system before the spindle rotation stops, it automatically alarms and deflates. After the rewinding position runs for more than 60 meters, the PLC program copies the roll number written by the RFID system at the unwinding position to the address at the rewinding position and displays it via the human-machine interface. When the roll diameter of the loading drum exceeds the preset value, no inflation action is performed, and no tensioning signal is triggered. After the rewinding position runs for more than 60 meters, the equipment maintains the inflation state, and the operator is prohibited from directly deflating via the inflation button after rewinding ends.

### (4) Rewinding position unloading

After the equipment rewinding ends, the PLC program writes the EA value of the roll into the address of the corresponding rewinding spindle and displays it on the human-machine interface. The operator clicks the "unloading confirmation" button of the corresponding rewinding spindle on the human-machine interface to trigger the "rewinding end" button. After the RFID system receives the "rewinding end" signal, it writes the unloading prohibition signal to the PLC address, reads the EA data of the corresponding rewinding spindle, performs completion splitting operation, and then issues the unloading OK signal and unloading permission signal. The PLC program controls inflation and deflation. After the RFID system obtains the rewinding end signal, it reads the EA value in the PLC address and calls the MES splitting completion interface to perform splitting completion operation. When it is not the last roll splitting, the RFID system performs splitting completion according to the physical EA quantity. When splitting to the last roll, the RFID system first calls the MES acquisition account quantity interface to obtain the account quantity of the unwinding material.

When the MES account quantity is less than the physical quantity, the RFID system performs splitting according to the account quantity. After splitting is completed, the MES account quantity after splitting is adjusted to the physical quantity using the die cutting process operation number (after splitting is completed, the MES account automatically enters the die cutting process). When the MES account quantity is greater than the physical quantity, the RFID system uses the MES account for splitting, and consumes all accounts. When the physical quantity is greater than 700, the splitting completion process is not executed, and deflation and unloading are directly performed. When an abnormality occurs in the completion operation of the RFID system, an abnormality alarm instruction is issued. If it is a MES abnormality, the MES abnormality code is issued. The PLC program displays the code in the human-machine interface in the form of a pop-up window.

The "unloading confirmation" button is not allowed to be triggered when the rewinding spindle is in the production state. After the current rewinding spindle receives the unloading OK signal, the subsequent rewinding spindle can be triggered, and direct triggering of the subsequent rewinding spindle is not allowed. When splitting completion operation cannot be performed at the end of rewinding, the operator can trigger the "abnormal unloading" signal via the "abnormal unloading" button on the human-machine interface. After the RFID system receives the signal, it writes unloading OK and unloading permission. The weight characteristic data and production process data of the current material are obtained according to the MES interface, and the MES splitting interface (splitting only without completion) is called first to obtain the roll number after splitting. Then, via the MES upload data and completion interface, the data is uploaded and bound to the roll number and completion processing is performed.

### 3. Die cutting process

### (1) Unwinding position loading

The operator places the incoming material with RFID tag at the unwinding position, presses the inflation button to trigger the "unwinding tensioning" signal, and automatically rotates slowly at 15 m/min for 15 S. The RFID system reads the RFID tag on the drum via the "unwinding tensioning" signal triggered by the PLC. After successful reading, the MES automatic entry interface is called to perform die cutting loading operation. After the entry interface is successfully called, the scanning OK result is issued to the PLC. After reading failure or loading operation failure, the RFID system writes an alarm instruction and scanning result to the PLC address. The PLC performs machine alarm, and the operator can trigger the loading operation again by pressing the inflation button.

### (2) Unwinding position start

The equipment issues the unwinding position start signal. After the RFID system obtains the "unwinding start" signal, it writes the "unloading prohibition" signal to the PLC address. The equipment maintains inflation until the end of unwinding and obtains the "unloading permission" signal issued by the RFID system.

### (3) Unwinding position end

When the equipment is about to end at the unwinding position and a deceleration action occurs, the "unwinding position end" signal is triggered. After the RFID system obtains the "unwinding position end" signal, it issues the "unloading permission" signal, and simultaneously generates the production information of the roll material. The current rewinding spindle status is obtained, and the last roll rewinding material is marked according to the rewinding spindle status. The unloading mark of the rewinding spindle is marked as the last roll split from the parent material of this roll.

### (4) Rewinding position loading

The operator places the empty drum with RFID tag at the rewinding position, triggers the "rewinding tensioning" signal via the inflation button/knob, and manually rotates the drum to make the RFID tag within the readable range. After successful reading, the RFID system writes the OK signal. In case of reading failure, the RFID system writes an alarm instruction and reading result. The PLC performs machine alarm, and the operator can trigger the loading operation again by pressing the inflation button. When tensioning and reading at the rewinding position, tag information with reading times less than 3 is filtered out.

### (5) Rewinding position start

The equipment triggers the "rewinding position start" signal. After the RFID system obtains the "rewinding start signal", it obtains the roll number bound to the current drum via the MES acquisition RFID binding information interface. If the drum has a bound roll number, the bound roll number of the drum is unbound via the MES unbinding interface. At the same time, after obtaining the "rewinding start signal", the RFID system writes the "unloading prohibition" signal to the address of the corresponding rewinding spindle. The equipment needs to maintain inflation until the end of rewinding. Only after the RFID system issues the unloading permission signal can manual deflation be performed.

### (6) Rewinding position end

When the equipment replaces new material at the unwinding position and reconnects the tape, and the yellow glue joint runs to the rewinding position, the equipment automatically triggers the "rewinding end" signal. At the same time, the operator can also manually trigger it via the "abnormal unloading" button of the corresponding rewinding spindle on the equipment superordinate computer. After the RFID system obtains the "rewinding end signal", it obtains the current rewinding EA value and marking number via the PLC address and performs splitting completion operation via the MES interface. The RFID system performs logic judgment according to the current EA value and obtains the account quantity of the unwinding position material (material to be split) via the MES interface.

When the current EA is less than 5 EA or greater than 350 EA, no splitting is performed. When the current EA value is less than the MES account, the MES splitting completion interface is directly called to perform splitting completion operation, and the remaining account is not processed. When the EA value is greater than the MES account, the RFID system first calls the MES adjustment quantity interface to adjust the MES account quantity to the physical quantity, and then performs splitting completion via the MES splitting completion interface. The RFID system marks the last roll material marked at the end of unwinding and uploads the mark to the MES during splitting.

After the RFID system splitting completion process is successfully processed, the "unloading permission" signal is issued to the PLC address, and the operator can perform unloading operation. If an abnormality occurs in the splitting completion process, the operator can manually trigger the splitting completion process via the "abnormal unloading" button on the equipment superordinate computer. After the RFID system executes the splitting completion process, the system binding information is cleared to complete the rewinding process.

The weight characteristic data and production process data of the current material are obtained according to the MES interface, and the MES splitting interface (splitting only without completion) is called first to obtain the roll number after splitting. Then, via the MES upload data and completion interface, the data is uploaded and bound to the roll number and completion processing is performed.

The description of each embodiment above tends to emphasize the differences between the various embodiments, and the similarities or identical parts can be cross-referenced, which will not be repeated here for brevity.

It should be noted that:
The term "module" is not intended to be limited to a specific physical form. Depending on the specific application, the module can be implemented as hardware, firmware, software, and/or a combination thereof. In addition, different modules can share common components or even be implemented by the same component. There may or may not be clear boundaries between different modules.

The algorithms and displays provided herein are not inherently related to any particular computer, virtual device, or other equipment. Various general-purpose devices can also be used with examples based herein. The structure required to construct such devices is obvious from the above description. In addition, the present application is not directed to any particular programming language. It should be understood that the content of the present application described herein can be implemented using various programming languages, and the description of specific languages above is to disclose the best embodiment of the present application.

It should be understood that although the various steps in the flowcharts of the drawings are sequentially displayed as indicated by the arrows, these steps are not necessarily executed sequentially as indicated by the arrows. Unless explicitly stated herein, there is no strict order limitation on the execution of these steps, and they can be executed in other orders. Moreover, at least part of the steps in the flowcharts of the drawings may include a plurality of sub-steps or a plurality of stages. These sub-steps or stages are not necessarily executed and completed at the same time, but can be executed at different times, and the execution order thereof is not necessarily sequential, but can be executed alternately or in rotation with at least part of other steps or sub-steps or stages of other steps.

The above embodiments merely express the implementation manners of the present application, and the description thereof is relatively specific and detailed, but should not therefore be understood as limiting the patent scope of the present application. It should be pointed out that for those of ordinary skill in the art, without departing from the concept of the present application, several deformations and improvements can also be made, which all belong to the protection scope of the present application. Therefore, the protection scope of the present application should be subject to the appended claims.

## Claims

1. An electrode sheet production system, comprising a manufacturing execution system, a coating superordinate computer, a coating device, a cold pressing superordinate computer, a cold pressing device, a die cutting superordinate computer, and a die cutting device, wherein the coating device, the cold pressing device, and the die cutting device are each provided with a radio frequency identification system; and the radio frequency identification system comprises a radio frequency reader-writer and an electronic tag;
the manufacturing execution system is connected to the coating superordinate computer, the cold pressing superordinate computer, and the die cutting superordinate computer; the coating superordinate computer is connected to the coating device, the cold pressing superordinate computer is connected to the cold pressing device, and the die cutting superordinate computer is connected to the die cutting device;
in the coating device, the cold pressing device, and the die cutting device, the radio frequency reader-writer is mounted on at least one side of a spindle for placing a material roll, and the electronic tag is mounted on a drum of the material roll; and
the radio frequency reader-writer is configured to read a radio frequency code of the material roll from the electronic tag of the material roll on the spindle, and transmit the radio frequency code to the manufacturing execution system.

2. The electrode sheet production system according to claim 1, wherein the coating device comprises a first rewinding spindle for installing a coated material roll and a first bracket provided on at least one side of the first rewinding spindle; and
the radio frequency reader-writer is mounted on at least one of the first brackets, and a radio frequency range of the radio frequency reader-writer covers one first rewinding spindle.

3. The electrode sheet production system according to claim 2, wherein
the radio frequency reader-writer mounted on the first bracket is configured to read the electronic tag in the coated material roll on the first rewinding spindle, and transmit the read coated radio frequency data to a programmable controller comprised in the coating device;
the programmable controller of the coating device is configured to transmit the coated radio frequency data to the coating superordinate computer; and
the coating superordinate computer is configured to determine a radio frequency code of the coated material roll based on the coated radio frequency data, and transmit the radio frequency code of the coated material roll to the manufacturing execution system.

4. The electrode sheet production system according to claim 3, wherein
the coating superordinate computer is configured to count the number of radio frequency codes with the same first preset number of digits from the coated radio frequency data; and determine the radio frequency code with the largest counted number as the radio frequency code of the coated material roll.

5. The electrode sheet production system according to any one of claims 1 to 4, wherein the cold pressing device comprises a first unwinding spindle for installing a coated material roll and a second rewinding spindle for installing a cold pressed material roll; wherein
at least one side of the first unwinding spindle is provided with a second bracket, and the radio frequency reader-writer is mounted on at least one of the second brackets;
one end of the second rewinding spindle is mounted on a first side surface of a first support plate, and a third bracket and a fourth bracket are also mounted on the first side surface; one end of the third bracket is mounted on the first side surface, and an end of the third bracket away from the first side surface is provided with a radio frequency reader-writer; and
one end of the fourth bracket is connected to an end of the third bracket close to the first side surface, one side surface of the fourth bracket is connected to the first support plate, an end portion of the other end of the fourth bracket is close to a position at which the second rewinding spindle is connected to the first support plate, and the other end of the fourth bracket is provided with a radio frequency reader-writer; and a power of the radio frequency reader-writer on the third bracket is greater than a power of the radio frequency reader-writer on the fourth bracket.

6. The electrode sheet production system according to claim 5, wherein
the radio frequency reader-writer mounted on the second bracket is configured to read the electronic tag in the coated material roll on the first unwinding spindle, and transmit the read coated radio frequency data to a programmable controller comprised in the cold pressing device;
the radio frequency reader-writers mounted on the third bracket and the fourth bracket are configured to read the electronic tag in the cold pressed material roll on the second rewinding spindle, and transmit the read cold pressed radio frequency data to the programmable controller comprised in the cold pressing device;
the programmable controller of the cold pressing device is configured to transmit the coated radio frequency data and the cold pressed radio frequency data to the cold pressing superordinate computer; and
the cold pressing superordinate computer is configured to: determine a radio frequency code of the coated material roll on the first unwinding spindle based on the coated radio frequency data; determine the radio frequency code of the cold pressed material roll based on the cold pressed radio frequency data; and transmit the radio frequency code of the coated material roll and the radio frequency code of the cold pressed material roll to the manufacturing execution system.

7. The electrode sheet production system according to claim 6, wherein
the cold pressing superordinate computer is configured to obtain the radio frequency code with the strongest signal strength from the cold pressed radio frequency data transmitted by the radio frequency reader-writer on the fourth bracket, as the radio frequency code of a first cold pressed material roll on the second rewinding spindle close to the fourth bracket; and exclude the radio frequency code of the first cold pressed material roll from the cold pressed radio frequency data transmitted by the radio frequency reader-writer on the third bracket, and obtain the radio frequency code with the strongest signal strength from the remaining cold pressed radio frequency data, as the radio frequency code of a second cold pressed material roll on the second rewinding spindle close to the third bracket.

8. The electrode sheet production system according to any one of claims 1 to 7, wherein the die cutting device comprises a second support plate, a first fixing rod, a second fixing rod, a fifth bracket, a sixth bracket, a second unwinding spindle for installing a cold pressed material roll, and a third rewinding spindle for installing a die cut material roll;
one end of the second unwinding spindle, one end of the third rewinding spindle, one end of the first fixing rod, and one end of the second fixing rod are all mounted on a first side surface of the second support plate;
one end of the fifth bracket is mounted on the first fixing rod, the other end of the fifth bracket is provided with a radio frequency reader-writer, and a radio frequency range of which covers the second unwinding spindle; and
one end of the sixth bracket is mounted on the second fixing rod, the other end of the sixth bracket is provided with a radio frequency reader-writer, and a radio frequency range of which covers the third rewinding spindle.

9. The electrode sheet production system according to claim 8, wherein
the radio frequency reader-writer mounted on the fifth bracket is configured to read the electronic tag in the cold pressed material roll on the second unwinding spindle, and transmit the read cold pressed radio frequency data to a programmable controller comprised in the die cutting device;
the radio frequency reader-writer mounted on the sixth bracket is configured to read the electronic tag in the die cut material roll on the third rewinding spindle, and transmit the read die cut radio frequency data to the programmable controller comprised in the die cutting device;
the programmable controller of the die cutting device is configured to transmit the cold pressed radio frequency data and the die cut radio frequency data to the die cutting superordinate computer; and
the die cutting superordinate computer is configured to: determine the radio frequency code of the cold pressed material roll on the second unwinding spindle based on the cold pressed radio frequency data; determine the radio frequency code of the die cut material roll based on the die cut radio frequency data; and transmit the radio frequency code of the cold pressed material roll and the radio frequency code of the die cut material roll to the manufacturing execution system.

10. The electrode sheet production system according to claim 9, wherein
the radio frequency reader-writer in the die cutting device is configured to perform a plurality of reading operations in the die cutting process, and upload the plurality of read radio frequency data to the die cutting superordinate computer via the programmable controller of the die cutting device; and
the die cutting superordinate computer is configured to select, for the radio frequency data obtained from a plurality of readings uploaded by each radio frequency reader-writer in the die cutting device, the radio frequency code that is read the largest number of times from the read radio frequency data as a finally identified radio frequency code.

11. The electrode sheet production system according to any one of claims 1 to 10, wherein a plurality of electronic tags are mounted on an inner wall of the drum, data stored in each electronic tag comprises the radio frequency code of the material roll and an identifier of the electronic tag, and a string of a first preset number of digits is the radio frequency code of the material roll; and
a portion of the plurality of electronic tags is mounted at one end of the inner wall of the drum, and another portion of the plurality of electronic tags is mounted at the other end of the inner wall of the drum.

12. The electrode sheet production system according to any one of claims 1 to 12, wherein the radio frequency identification system further comprises a mounting member, the mounting member comprising a body, an elastic piece formed on the body, and a fixing member; wherein
one surface of the body is an arc surface, and a card slot is provided on the other surface, the electronic tag is inserted into the card slot, and the elastic piece is in contact with and presses the electronic tag; and
the fixing member is configured to fix the mounting member on the inner wall of the drum, and the arc surface is in contact with the inner wall of the drum.

13. The electrode sheet production system according to any one of claims 1 to 13, wherein the coating device, the cold pressing device, and the die cutting device each comprise a switch and a programmable controller; and the electrode sheet production system further comprises a workshop logistics and radio frequency middleware system, an automated guided vehicle system, and a warehouse management system;
in the coating device, the cold pressing device, and the die cutting device, the radio frequency reader-writer in each device is connected to the programmable controller via the switch;
the programmable controller of the coating device is connected to the coating superordinate computer, the programmable controller of the cold pressing device is connected to the cold pressing superordinate computer, and the programmable controller of the die cutting device is connected to the die cutting superordinate computer; and
the manufacturing execution system, the workshop logistics and radio frequency middleware system, the automated guided vehicle system, and the warehouse management system are each connected to the coating superordinate computer, the cold pressing superordinate computer, and the die cutting superordinate computer via a local area network.

14. A control method for an electrode sheet production system, applied to the electrode sheet production system according to any one of claims 1 to 13, wherein the method comprises:
in response to a coating rewinding signal, controlling a radio frequency reader-writer at a rewinding spindle of a coating process to read a radio frequency code of a coated material roll from an electronic tag of the coated material roll obtained by rewinding, and generating a coating roll number of the coated material roll;
in response to a cold pressing unwinding signal, controlling a radio frequency reader-writer at an unwinding spindle of a cold pressing process to read a radio frequency code of an unwound coated material roll from an electronic tag of the unwound coated material roll; obtaining a corresponding coating roll number based on the radio frequency code of the unwound coated material roll; and generating a cold pressing roll number based on the obtained coating roll number; and in response to a cold pressing rewinding signal, controlling a radio frequency reader-writer at a rewinding spindle of the cold pressing process to read a radio frequency code of a cold pressed material roll from an electronic tag of the cold pressed material roll obtained by rewinding; and
in response to a die cutting unwinding signal, controlling a radio frequency reader-writer at an unwinding spindle of a die cutting process to read a radio frequency code of an unwound cold pressed material roll from an electronic tag of the unwound cold pressed material roll; obtaining a corresponding cold pressing roll number based on the radio frequency code of the unwound cold pressed material roll; and generating a die cutting roll number based on the obtained cold pressing roll number; and in response to a die cutting rewinding signal, controlling a radio frequency reader-writer at a rewinding spindle of the die cutting process to read a radio frequency code of a die cut material roll from an electronic tag of the die cut material roll obtained by rewinding.

15. The method according to claim 14, wherein the method further comprises:
in the coating process, storing a mapping relationship between the coating roll number of the coated material roll obtained by rewinding and the radio frequency code;
in the cold pressing process, storing a mapping relationship among the radio frequency code of the unwound coated material roll, the cold pressing roll number, and the radio frequency code of the cold pressed material roll obtained by rewinding; and
in the die cutting process, storing a mapping relationship among the radio frequency code of the unwound cold pressed material roll, the die cutting roll number, and the radio frequency code of the die cut material roll obtained by rewinding.

16. The method according to claim 14 or 15, wherein a plurality of electronic tags are mounted on the coated material roll, and reading a radio frequency code of the coated material roll comprises:
based on data of the plurality of read electronic tags, counting the number of electronic tags with the same first preset number of digits; and
extracting a character sequence of the first preset number of digits from the data of the electronic tag with the largest counted number as the radio frequency code of the coated material roll.

17. The method according to any one of claims 14 to 16, wherein a first radio frequency reader-writer and a second radio frequency reader-writer are respectively provided on two sides of the rewinding spindle of the cold pressing process, and a power of the first radio frequency reader-writer is greater than a power of the second radio frequency reader-writer; and the reading a radio frequency code of a cold pressed material roll comprises:
selecting a radio frequency code with the strongest radio frequency signal strength from radio frequency codes read by the second radio frequency reader-writer, as the radio frequency code of the first cold pressed material roll on the rewinding spindle of the cold pressing process close to the second radio frequency reader-writer; and
excluding the radio frequency code of the first cold pressed material roll from the radio frequency codes read by the first radio frequency reader-writer, and obtaining a radio frequency code with the strongest radio frequency signal strength from the remaining radio frequency codes, as the radio frequency code of the second cold pressed material roll on the rewinding spindle of the cold pressing process close to the first radio frequency reader-writer.

18. The method according to any one of claims 14 to 17, wherein the reading a radio frequency code of a die cut material roll comprises:
controlling the radio frequency reader-writer at the rewinding spindle of the die cutting process to perform a plurality of reading operations on the electronic tag of the die cut material roll obtained by rewinding; and
determining the radio frequency code that is read the largest number of times as the radio frequency code of the die cut material roll.

19. The method according to any one of claims 14 to 18, wherein the method further comprises:
in the coating process, in response to a rewinding end signal triggered by a cutter, obtaining a first-side coating production amount of a target coated material roll currently obtained by rewinding;
recording the first-side coating production amount in roll information corresponding to the coating roll number of the target coated material roll;
upon receiving a first-side data collection end instruction, determining that first-side coating of the target coated material roll is completed;
controlling a coating device to perform a coating operation on a second side of the target coated material roll, the second side being the other side opposite to the first side; and
upon receiving a second-side data collection end instruction, determining that coating of the target coated material roll is completed.

20. The method according to any one of claims 14 to 19, wherein the method further comprises:
in the cold pressing process, upon detecting a rewinding end signal of the last splitting rewinding corresponding to a currently unwound coated material roll, obtaining a current account quantity corresponding to the currently unwound coated material roll; and
calculating a ratio of the current account quantity to the number of rolls of each target cold pressed material roll, using the ratio as an account production amount of each target cold pressed material roll, and storing the account production amount of each target cold pressed material roll in roll information corresponding to the cold pressing roll number of each target cold pressed material roll.

21. The method according to claim 20, wherein the method further comprises:
in response to the rewinding end signal of the last splitting rewinding, obtaining a current physical quantity corresponding to the currently unwound coated material roll;
under the condition that the current account quantity is less than the current physical quantity, in response to entering the die cutting process, calculating an actual production amount of each target cold pressed material roll based on the current physical quantity and the number of rolls of each target cold pressed material roll; and
in roll information corresponding to the die cutting roll number, modifying the account production amount of each target cold pressed material roll to the actual production amount of each target cold pressed material roll, respectively.

22. The method according to any one of claims 14 to 21, wherein the method further comprises:
in response to a rewinding end signal in the die cutting process, obtaining a current account quantity and a current physical quantity of a currently unwound cold pressed material roll;
under the condition that the current physical quantity is less than or equal to the current account quantity, calculating a first ratio between the current physical quantity and the number of rolls of each die cut material roll, and storing the first ratio as an account production amount of each die cut material roll in roll information corresponding to the die cutting roll number of each die cut material roll; and
under the condition that the current physical quantity is greater than the current account quantity, modifying the current account quantity of the currently unwound cold pressed material roll recorded in the system to the current physical quantity, calculating a second ratio between the modified current account quantity and the number of rolls of each die cut material roll, and storing the second ratio as an account production amount of each die cut material roll in roll information corresponding to the die cutting roll number of each die cut material roll.
